(19) Europäisches Patentamt
European Patent Office
Office européen des brevets

(11) **EP 3 520 240 B1**

(12) **EUROPEAN PATENT SPECIFICATION**

(45) Date of publication and mention
of the grant of the patent:
**27.10.2021 Bulletin 2021/43**

(21) Application number: **17785078.1**

(22) Date of filing: **28.09.2017**

(51) Int Cl.:
*H04B 7/06* (2006.01)     *H04W 56/00* (2009.01)

(86) International application number:
**PCT/US2017/053902**

(87) International publication number:
**WO 2018/064271 (05.04.2018 Gazette 2018/14)**

(54) **SYNCHRONIZATION IN BEAMFORMED NEW RADIO SYSTEMS**

SYNCHRONISATION IN STRAHLGEFORMTEN NEUEN FUNKSYSTEMEN

SYNCHRONISATION DANS DE NOUVEAUX SYSTÈMES RADIO À FORMATION DE FAISCEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2016 US 201662400962 P
06.01.2017 US 201762443074 P
22.03.2017 US 201762474886 P**

(43) Date of publication of application:
**07.08.2019 Bulletin 2019/32**

(73) Proprietor: **Sony Group Corporation
Tokyo 108-0075 (JP)**

(72) Inventors:
• **PAN, Kyle, Jung-Lin
Saint James
NY 11780 (US)**
• **YE, Chunxuan
San Diego
CA 92127 (US)**
• **XI, Fengjun
San Diego
CA 92126 (US)**
• **OLESEN, Robert, L.
Huntington
NY 11743 (US)**
• **FERRANTE, Steven
Doylestown
PA 18902 (US)**

(74) Representative: **Witte, Weller & Partner
Patentanwälte mbB
Postfach 10 54 62
70047 Stuttgart (DE)**

(56) References cited:
**US-A1- 2015 365 155**

• **INTEL CORPORATION: "Initial performance evaluation of different beamforming options for NR synchronization signals", 3GPP DRAFT; R1-167707, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051126044, Retrieved from the Internet: URL:http://www.3gpp.org/ftp/Meetings_3GPP_ SYNC/RAN1/Docs/ [retrieved on 2016-08-21]**
• **NTT DOCOMO ET AL: "Discussion on initial access and mobility for NR", 3GPP DRAFT; R1-167912_DISCUSSION ON INITIAL ACCESS AND MOBILITY FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Gothenburg, Sweden; 20160822 - 20160826 28 August 2016 (2016-08-28), XP051133177, Retrieved from the Internet: URL:http://www.3gpp.org/ftp/tsg_ran/WG1_RL 1/TSGR1_86/Docs/ [retrieved on 2016-08-28]**

**(Cont. next page)**

- **KT CORP: "Sync and Beam Acquisition Procedure in Multi-Beam Based Approach", 3GPP DRAFT; R1-167028 TIMING AND BEAM ACQUISITION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051125676, Retrieved from the Internet: URL:http://www.3gpp.org/ftp/Meetings_3GPP_ SYNC/RAN1/Docs/ [retrieved on 2016-08-21]**
- **LG ELECTRONICS: "Discussion on PRACH preamble design and RACH procedure for NR", 3GPP DRAFT; R1-166911_LG_DISCUSSION ON PRACH PREAMBLE DESIGN AND RACH PROCEDURE IN NR, 3RD GENERATION PARTNERSHIP PROJECT (3GPP), MOBILE COMPETENCE CENTRE ; 650, ROUTE DES LUCIOLES ; F-06921 SOPHIA-AN , vol. RAN WG1, no. Gothenburg, Sweden; 20160822 - 20160826 21 August 2016 (2016-08-21), XP051140427, Retrieved from the Internet: URL:http://www.3gpp.org/ftp/Meetings_3GPP_ SYNC/RAN1/Docs/ [retrieved on 2016-08-21]**
- **INTEL CORPORATION: "Design on NR DL Synchronization", 3GPP DRAFT; R1-167705, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051126042, Retrieved from the Internet: URL:http://www.3gpp.org/ftp/Meetings_3GPP_ SYNC/RAN1/Docs/ [retrieved on 2016-08-21]**

**Description**

**CROSS-REFERENCE TO RELATED APPLICATIONS**

**BACKGROUND**

Mobile communications continue to evolve. A fifth generation may be referred to as 5G. A previous (legacy) generation of mobile communication may be, for example, fourth generation (4G) long term evolution (LTE).

Prior art can be found in the following documents:

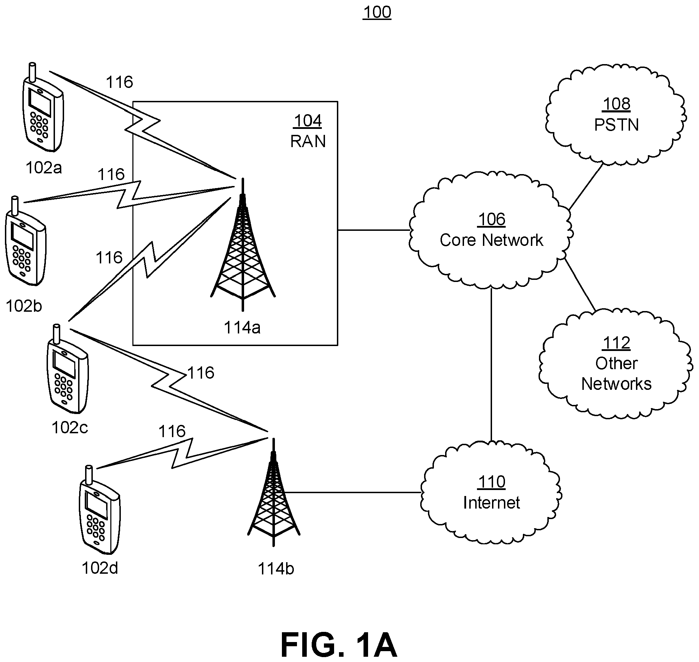

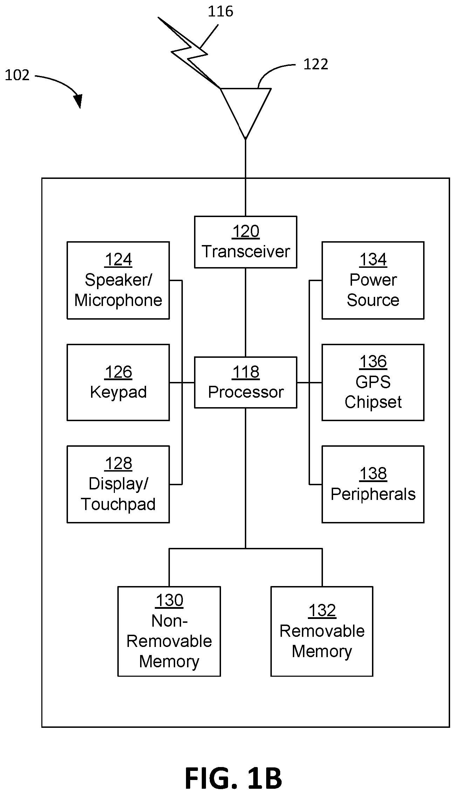

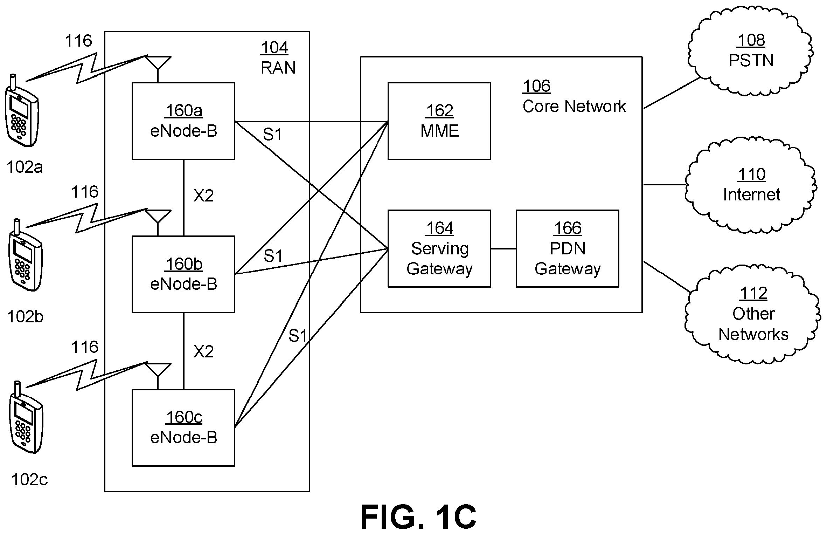

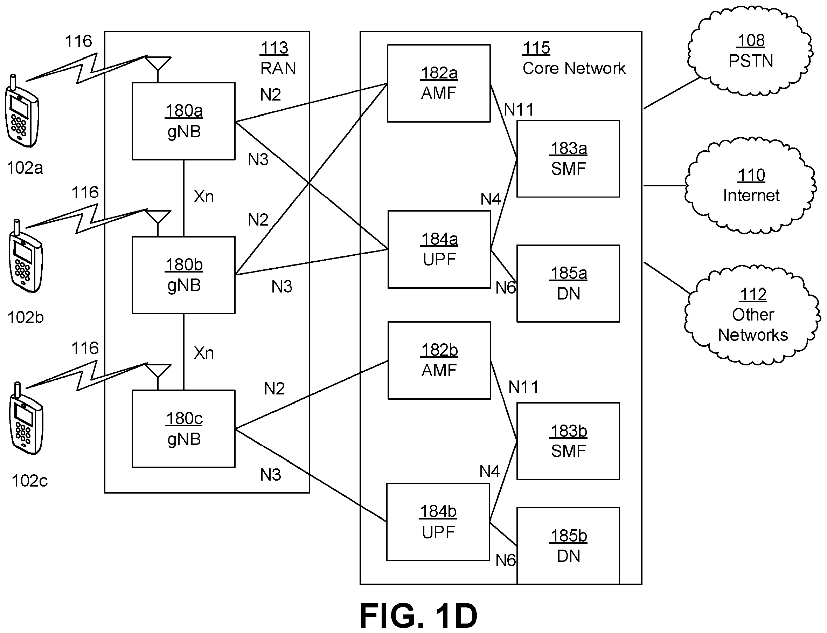

INTEL CORPORATION, "Initial performance evaluation of different beamforming options for NR synchronization signals", vol. RAN WG1, no. Gothenburg, Sweden; 20160822 - 20160826, (20160821), 3GPP DRAFT; R1-167707, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, URL: http://www.3gpp.org/ftp/Meetings 3GPP SYNC/RAN1/Docs/; This document discloses an NR synchronization signal (SS) structure and different beamforming options. Fig. 1 shows such a NR SS structure used for evaluations, according to which a SS burst series comprises a number of SS bursts each comprising a number of synchronization signals. Multi-beam and single-beam NR SS transmission is discussed. In the option using single-beam NR SS transmission, the single beam assumption at the UE is used to perform coherent combining of OFDM symbols within the same NR SS burst at the Rx side.

NTT DOCOMO ET AL, "Discussion on initial access and mobility for NR", vol. RAN WG1, no. Gothenburg, Sweden; 20160822 - 20160826, (20160828), 3GPP DRAFT; R1-167912_DISCUSSION ON INITIAL ACCESS AND MOBILITY FOR NR, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX;, URL: http://www.3gpp.org/ftp/tsg ran/WG1 RL1/TSGR1 86/Docs/.

**SUMMARY**

Systems, procedures, and instrumentalities are disclosed for synchronization in beamformed systems such as new Radio (NR). A common SYNC channel may be provided for single and multi-beam systems. A SYNC burst structure may be provided for beam-based systems. Procedures enabling or supporting single and multi-beam deployment may provide, for example, a common SYNC for TDD and FDD, a common SYNC for mixed numerologies, SYNC for larger bandwidth and SYNC transmission and reception for single and multiple TRPs.

According to the present invention a wireless transmit/receive unit (WTRU) for synchronizing with a beamforming cellular communications network and a corresponding method are presented as defined in the claims. The WTRU includes a processor that is configured to: receive, at the WTRU, within a beam, a SYNC burst set, comprising a plurality of SYNC bursts as defined in claim 1.

The synchronization parameters include one or more of a SYNC signal type, a beam sweep type, a beam sweep order, an ACK resource configuration, and a beam hopping pattern.

The WTRU processor may be configured to perform a beam sweep for receiving the SYNC burst set. The beam sweep may include a partial beam sweep and the WTRU processor may be configured to determine to conduct the partial beam sweep on certain beams sent by the beamforming cellular communications network.

The WTRU processor may be configured to perform a first beam sweep, determine a first beam pairing between the WTRU and the beamforming cellular communications network, and perform a second beam sweep with the first beam pairing.

The WTRU processor may be configured to determine whether a SYNC operation mode is single beam or multi-beam by using one of PSS and SSS timing and/or frequency differences, PSS sequences and cyclic beam shift; and/or beam sequences in beam sweeps.

The SYNC operation mode may include one of single beam operation mode, multi-beam operation mode, and partial multi-beam operation mode.

A method for synchronizing a WTRU with a beamforming cellular communications network may include: receiving, at the WTRU, within a beam, a SYNC burst set, comprising a plurality of SYNC bursts that may each include multiple symbols, from the beamforming cellular communications network as defined in claim 8.

The synchronization method may include the WTRU performing a beam sweep in order to receive the SYNC burst set. The beam sweep may include a partial beam sweep. The WTRU may determine to conduct the partial beam sweep on certain beams sent by the beamforming cellular communications network.

The synchronization method may include performing a first beam sweep, determining a first beam pairing between the WTRU and the beamforming cellular communications network, and performing a second beam sweep with the first beam pairing.

The synchronization method may include determining whether a SYNC operation mode is single beam or multi-beam by using one of PSS and SSS timing and/or frequency differences, PSS sequences and cyclic beam shift; and/or beam sequences in beam sweeps.

**BRIEF DESCRIPTION OF THE DRAWINGS**

FIG. 1A is a system diagram illustrating an example communications system in which one or more disclosed embodiments may be implemented.

FIG. 1B is an example system diagram illustrating an example wireless transmit/receive unit (WTRU) that may be used within the communications system illustrated in FIG. 1A.

FIG. 1C is an example system diagram illustrating an example radio access network (RAN) and an example core network (CN) that may be used within the communications system illustrated in FIG. 1A.

FIG. 1D is an example system diagram illustrating an example RAN and an example CN that may be used within the communications system illustrated in FIG. 1A.

FIG. 2 is an example of a multi-beam regular SYNC signal (gNB-oriented).

FIG. 3 is an example of a multi-beam regular SYNC signal (UE-oriented.

FIG. 4 is an example of a multi-beam short SYNC signal.

FIG. 5A is an example of a hybrid SYNC signal structure for beam-based operation.

FIG. 5B is an example of a unified SYNC signal burst structure for single and multi-beam operations.

FIG. 6 is an example of a common framework of SYNC signal for single and multi-beam operations.

FIG. 7 is an example of a common framework of SYNC signal generation procedure for single and multi-beam operations.

FIG. 8 is an example of a common unified framework of SYNC signal burst for single and multi-beam operations.

FIG. 9 is an example of a common framework of SYNC signal detection procedure for single and multi-beam operations.

FIG. 10 is an example SYNC signal detection for single and multi-beam based initial access procedures.

FIG. 11 is an example SYNC signal and burst structure for single and multi-beam operations.

FIG. 12 is an example SYNC signal and burst structure for Single and Multi-Beam based systems.

FIG. 13 is an example SYNC signal type 1 and indication for multi-beam.

FIG. 14 is an example SYNC signal type 2 and indication for multi-beam.

FIG. 15 is an example SYNC signal type 3 and indication for multi-beam.

FIG. 16 is an example SYNC signal type 4 and indication for multi-beam.

FIG. 17A is an example of SYNC signal separations for FDD systems.

FIG. 17B is an example of SYNC signal separations for TDD systems.

FIG. 18 is an example of SYNC signal separations for mixed FDD and TDD systems.

FIG. 19 is an example of a dynamic TDD frame structure.

FIG. 20 is an example of SYNC signal separations for different sub-bands with different numerologies.

FIG. 21 is an example of SYNC signals in the frequency domain.

FIG. 22 is an example of SYNC signals in the frequency domain with a simple extension.

FIG. 23 is an example of SYNC signals in the frequency domain with repetition at RB level.

FIG. 24 is an example of SYNC signals in frequency domain with repetition at subcarrier level.

FIG. 25A is an example of SYNC signals in frequency domain with increased ZC sequence.

FIG. 25B is an example of SYNC signals in frequency domain with repetition at RB levels with separations.

FIG. 25C is an example of SYNC signals in frequency domain with repetition at subcarrier levels with separations.

FIG. 25D is an example of SYNC signals in frequency domain with mixed use at RB levels with separations.

FIG. 26 is an example of a deployment of multiple TRP with a signal SYNC beam.

FIG. 27 is an example of a deployment of multiple TRP with multiple SYNC beams and synchronous transmission.

FIG. 28 is an example of joint transmissions for a multi-beam full SYNC signal or a multi-beam partial SYNC signal Type 1.

FIG. 29 is an example of joint transmissions for a multi-beam partial SYNC signal Type 2.

FIG. 30 is an example of a deployment of multiple TRPs with multiple SYNC beams and alternative transmissions in the spatial domain.

FIG. 31 is an example of spatial domain sharing for a multi-beam full SYNC signal or a multi-beam partial SYNC signal Type 1.

FIG. 32 is an example of spatial domain sharing for a multi-beam partial SYNC signal Type 2.

FIG. 33 is an example of a deployment of multiple TRPs with multiple SYNC beams and alternative transmissions in the time domain.

FIG. 34 is an example of a procedure for TRPs to gain knowledge of their SYNC beam overlap.

FIG. 35 is an example of a TRP-Oriented Synchronization.

FIG. 36 is an example of a WTRU-Oriented Synchronization.

FIG. 37 is an example of a Hybrid TRP/WTRU-Oriented Synchronization.

## DETAILED DESCRIPTION

A detailed description of illustrative embodiments will now be described with reference to the various Figures. Although this description provides a detailed example of possible implementations, it should be noted that the details are intended to be exemplary and in no way limit the scope of the application.

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an example useful to understand the present invention, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an example useful to understand the present invention, the base station 114a and the WTRUs 102a, 102b, 102c may implement a radio technology such as NR Radio Access , which may establish the air interface 116 using New Radio (NR).

In an example useful to understand the present invention, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other examples useful to understand the present invention, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable locationdetermination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit 139 to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (*e.g.,* for transmission) or the downlink (e.g., for reception)).

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during intereNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative examples useful to understand the present invention, that such a terminal may use (e.g., temporarily or permanently) wired communication interfaces with the communication network.

In examples useful to understand the present invention, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "adhoc" mode of communication.

When using the 802.11ac infrastructure mode of operation or a similar mode of operations, the AP may transmit a beacon on a fixed channel, such as a primary channel. The primary channel may be a fixed width *(e.g.,* 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11afand 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernetbased, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-ab, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

5G New Radio (NR) use cases may include, for example, Enhanced Mobile Broadband (eMBB), Massive Machine Type Communications (mMTC) and Ultra Reliable and Low latency Communications (URLLC). Different use cases may have different requirements (e.g., a higher data rate, higher spectrum efficiency, lower power and higher energy efficiency, lower latency and higher reliability). A wide range of spectrum bands (e.g., 700 MHz to 80 GHz) may be used in a variety of deployment scenarios.

As carrier frequency increases, severe path loss may limit coverage. Transmission in millimeter wave systems may (e.g., additionally) suffer from non-line-of-sight losses, e.g., diffraction loss, penetration loss, oxygen absorption loss, foliage loss, etc. A base station and WTRU may overcome high path losses and discover each other, e.g., during initial access. A beam-formed signal may be generated, for example, by utilizing many (e.g., dozens or hundreds) of antenna elements, which may compensate the severe path loss by providing significant beam forming gain. Beamforming techniques may include, for example, digital, analog and hybrid beamforming.

A WTRU may use a cell search procedure to acquire time and frequency synchronization with a cell and to detect a Cell ID. Synchronization signals (e.g., LTE synchronization signals) may be transmitted, for example, in the 0th and 5th subframes of a (e.g., every) radio frame and may be used for time and frequency synchronization, e.g., during initialization. A WTRU (e.g., during a system acquisition process) may synchronize sequentially to an OFDM symbol, slot, subframe, half radio frame, and radio frame, for example, based on synchronization signals.

There may be multiple (e.g., two) synchronization signals (e.g., Primary Synchronization Signals (PSS) and Secondary Synchronization Signals (SSS)). A PSS may be used to obtain OFDM symbol timing and may provide physical layer cell identity (PCI) within a cell identity group. An SSS may be used to obtain a radio frame boundary and may enable a WTRU to determine a cell identity group, which may range from 0 to 167, for example. Synchronization signals (e.g., LTE synchronization signals) and/or PBCH may be transmitted continuously, e.g., according to standardized periodicity.

A WTRU may (e.g., following a successful synchronization and PCI acquisition) decode a Physical Broadcast Channel (PBCH), for example (e.g., using a PBCH-specific DMRS) and may acquire MIB information regarding system bandwidth, System Frame Number (SFN) and other system information.

Procedures are provided for initial synchronization in beamforming systems.

Single and multi-beam based deployment (e.g., in NR) may have a common framework for a SYNC signal.

A SYNC procedure may provide NR cell ID and initial time/frequency synchronization to a (e.g., NR) cell that may consist of a single TRP or multiple TRPs.

Beam sweeping may cover a service area, e.g., for single and multiple RF chains.

Beam sweep providing full coverage may be provided with reduced overhead.

A procedure may detect beam ID. Beam ID may be a SYNC time index, SYNC timeslot ID or SYNC symbol ID, synchronization signal (SS) block time index, etc... that is associated with the beam ID.

A common SYNC channel component may be provided for a plurality of beam systems (e.g., single- and multi-beam systems). SYNC burst structures and patterns may be provided for multi-beam operation. Procedures may enable and support single and multi-beam deployment and associated beam sweeping procedure(s).

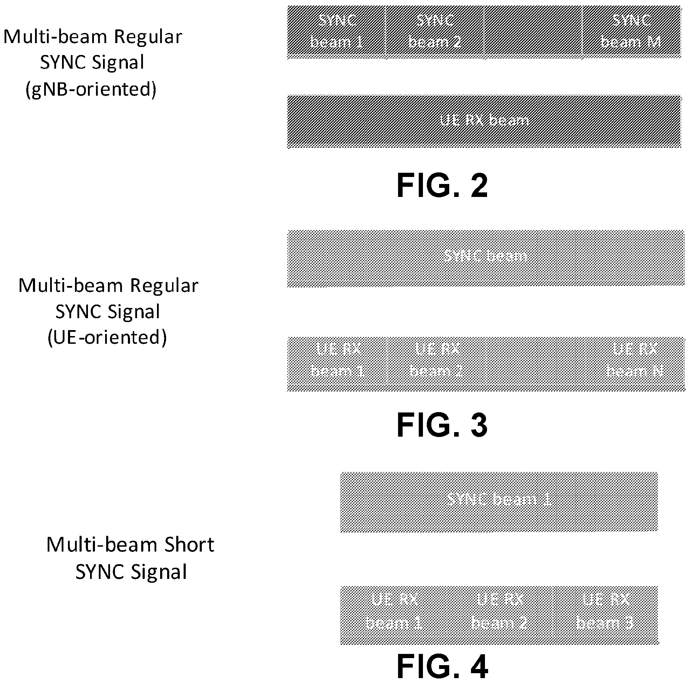

FIGS. 2-4 show examples of three SYNC burst structures.

FIG. 2 is an example of a multi-beam regular SYNC signal (TRP or gNB-oriented). A gNB may divide a (e.g., each) SYNC period (e.g., SYNC signal burst set) into different time slots (or bursts) or symbols in which a different beam may be transmitted. A SYNC signal burst set may comprise one or more SYNC signal bursts or SYNC signal timeslots. A SYNC signal burst (or timeslot) may comprise one or more SYNC signal sub-timeslots or one or more SYNC signal symbols. A SYNC signal sub-timeslot or SYNC signal symbol may comprise one or more SYNC signals such as PSS, SSS and/or PBCHs. TRP may refer to a transmission and/or reception point.

The SYNC signal burst set may be a synchronization signal (SS) burst set or the like. The SYNC burst or timeslot may be a SS burst or the like. SYNC signal sub-timeslot or SYNC signal symbol may be a SS block or the like. SYNC signal within a SYNC signal sub-timeslot or SYNC signal symbol may include at least one of the PSS, SSS and PBCH. Each SYNC signal (e.g., PSS, SSS and PBCH) may occupy at least one OFDM symbol in time domain.

FIG. 3 is an example of a multi-beam regular SYNC signal (WTRU-oriented). A gNB may transmit a (e.g., single) beam over a (e.g., entire) SYNC period while a WTRU may cycle through different beams.

FIG. 4 is an example of a multi-beam short SYNC signal. A SYNC period may be reduced and (e.g., only) a subset of available beams may be used from the WTRU or a gNB.

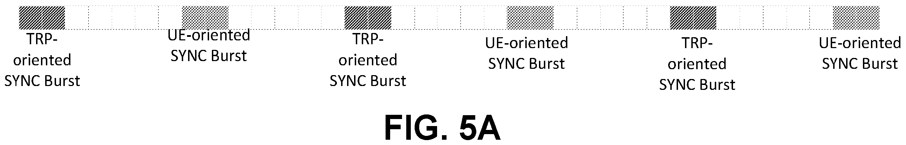

Based on the basic SYNC burst structures described with respect to FIGS. 2-4, a hybrid SYNC signal, illustrated in FIG. 5A, may be defined. For example, the hybrid SYNC signal structure may be defined by a TRP-oriented SYNC burst being transmitted alternately in time with WTRU-oriented SYNC burst. In some examples, the alternation between TRP-oriented and WTRU-oriented SYNC bursts may not be one-to-one as illustrated in FIG. 5A (e.g., two TRP-oriented, then one WTRU-oriented, or vice versa, etc.). In other examples, the bursts may alternate in a one-to-one relationship as illustrated in FIG. 5A.

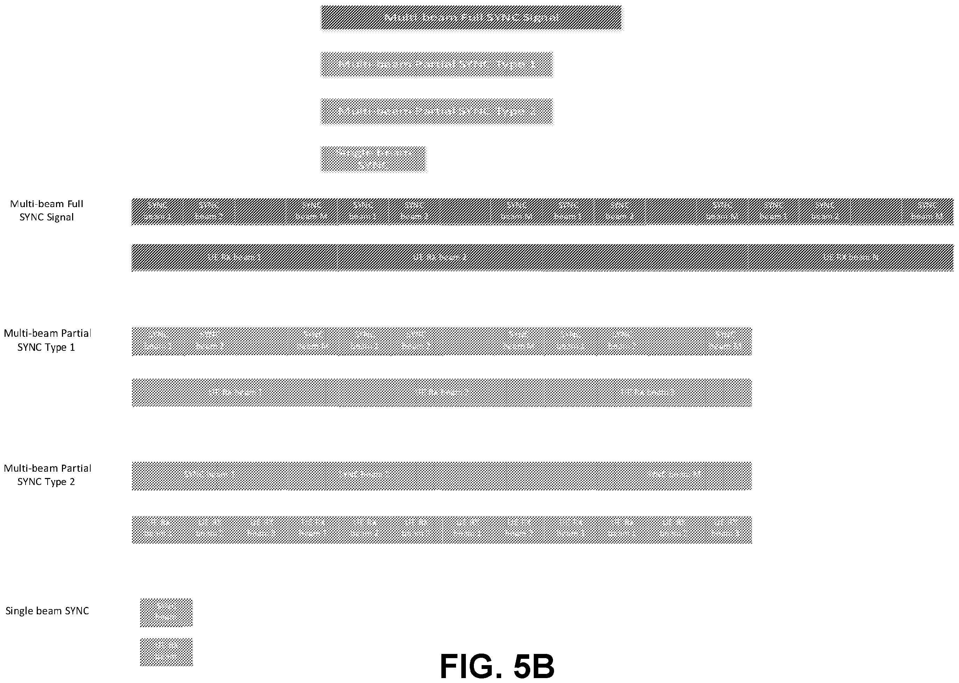

FIG. 5B is an example of a SYNC signal structure for single and multi-beam operations. FIG. 5B shows an example of four SYNC modes based on, for example, the three basic SYNC burst structures shown in FIGS. 2-4.

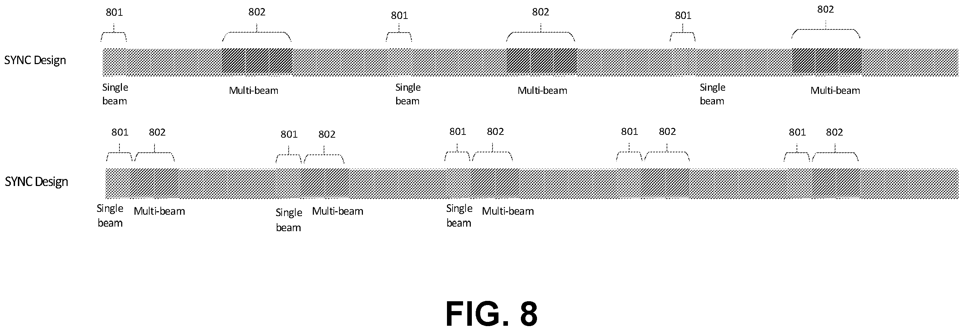

A multi-beam full SYNC signal (long) mode may allow a full beam sweep at a gNB and a WTRU. In an example, a gNB may sequentially cycle N times through (e.g., all of) its available M beams. N may be a number of distinct WTRU beams and M may be a number of distinct gNB beams. A WTRU may receive a gNB cycle, for example, using one of its N beams. This process may be reversed. A WTRU may sequentially cycle M times through its available N beams. A SYNC signal period (e.g., a full SYNC signal period or SYNC signal burst set) may be divided into different time slots (e.g., bursts), which may include symbols, in which a beam (e.g., a different beam) may be transmitted. A SYNC signal period (e.g., a SYNC signal burst set) may comprise one or more SYNC signal bursts or timeslots (e.g., N SYNC signal bursts or timeslots, such as for WTRU Rx beams 1, ..., N). A SYNC signal burst may comprise one or more SYNC signal sub-timeslots or SYNC signal symbols (e.g., M SYNC signal sub-timeslots or SYNC signal symbols, such as for gNB Tx beams 1, 2, ..., M). A SYNC signal sub-timeslot and/or SYNC signal symbol may comprise one or more SYNC signals (or OFDM symbols). For example, a SYNC signal sub-timeslot and/or symbol may comprise a PSS, SSS, PBCH (and/or other SS), and/or other broadcast signal and/or channel. SYNC signal bursts (or timeslots) within a full SYNC signal burst set (e.g., SYNC signal burst set) may be adjacent or consecutive in time. SYNC signal bursts within a full SYNC signal burst set and/or SYNC signal burst set that are adjacent or consecutive in time are illustrated in FIG. 5B (multi-beam full SYNC signal). SYNC signal bursts within a SYNC signal burst set that are not adjacent or not consecutive in time are illustrated in FIG. 8. The SYNC mode (e.g., with full beam sweep at the gNB and WTRU) may be used, for example, for initial setting or resetting of a beam pairing.

A multi-beam gNB-oriented partial SYNC signal type 1 (short) mode may be used, for example, for gNB-oriented full beam sweep with partial beam sweep for a WTRU. A gNB may perform a full TX beam sweep for a given WTRU RX beam. This process may repeat for a subset of available WTRU RX beams. FIG. 5B shows an example using three Rx beams. A gNB may have a higher priority for beam sweep in this mode, for example, given that a gNB may cycle through one or more (e.g., all) of its available beams before going to the next WTRU RX beam. This mode may be used, for example, for low latency application or fast SYNC acquisition purposes, e.g., given that a gNB may have a higher priority for the beam sweep.

A multi-beam WTRU-oriented partial SYNC signal type 2 (short) mode may allow for full beam sweep for a gNB and partial beam sweep for a WTRU. A WTRU may have higher priority, for example, given that a WTRU may cycle through its beams (e.g., a subset of available beams) while a gNB may transmit (e.g., only) one of its M beams for each WTRU cycle. This mode may be used, for example, when a-priori knowledge about a gNB TX beam may be known, e.g., given a WTRU may have higher priority for a beam sweep. A WTRU may (e.g., with appropriate information) perform a beam sweep (e.g., only) on desired gNB beam(s), which may reduce processing power and delay.

A single beam SYNC signal mode may be used, for example, when a gNB and a WTRU may utilize (e.g., only) a single beam. There may not be beam cycling at the either end of a link. This structure may be used, for example, for fallback to single beam operation at the gNB and WTRU.

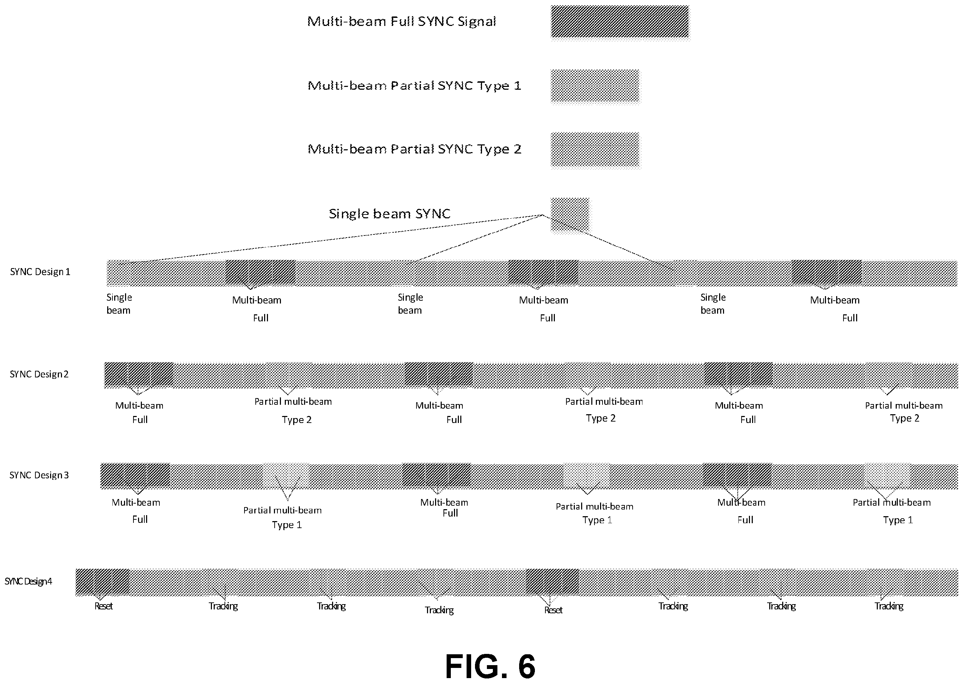

There may be several overall SYNC procedures, for example, based on the four SYNC modes described herein. For example, a common framework for single beam and multi-beam operation may be achieved (e.g., as shown in an example illustrated in FIG. 6). A single beam SYNC signal and a multi-beam SYNC signal may be alternately transmitted in time (or frequency).

In an (e.g., another) example, a multi-beam full SYNC signal may be alternately transmitted in time with multi-beam partial SYNC signal (e.g., type 1 or type 2). A multi-beam full SYNC may be used, for example, for initial setting while a multi-beam partial SYNC may be used, for example, for tracking purposes. A WTRU may (e.g., coarsely) identify gNB TX beam#x and WTRU RX beam#y during multi-beam full SYNC for initial setting.

A WTRU may, for example, continue tracking a gNB TX beam and WTRU RX beam (e.g., beyond initial settings), for example, using a multi-beam partial SYNC. Examples of a tracking procedure may include one or more of the following, for example: (i) a WTRU may continue tracking one or more (e.g., all) gNB beam#1, 2, ...,M using WTRU RX beam#y; (ii) a WTRU may continue tracking one or more (e.g., all) gNB beam#1, 2, ...,M using WTRU RX beam#y-1, y and y+1; (iii) a WTRU may continue tracking gNB beam#x-1, x and x+1 using WTRU RX beam#y; and/or (iv) a WTRU may continue tracking gNB beam#x-1, x and x+1 using WTRU RX beam#y-1, y and y+1.

A hierarchical type beam sweep procedure may be defined, for example, using different SYNC modes. For example, a multi-beam full SYNC mode where the gNB may use M beams to cover an entire desired spatial region may (e.g., instead) cover the same spatial region with less than M beams (e.g., M/2). The same philosophy may be used at a WTRU, for example, by covering the same spatial region with less than N beams. Beams (e.g., in either case) may be wider and (e.g., hence) may have less directivity gain. Gain may be compensated, for example, by maintaining the beam for a longer time duration and/or by lowering a detection threshold at the WTRU. This mode may be used, for example, to establish an initial setting for a beam pairing.

A second phase of a hierarchical procedure may be implemented, for example, using a multi-beam partial SYNC signal. A multi-beam partial SYNC signal may be used in a second phase, for example, because (e.g., only) a subset of N(M) beams that may be contained in the spatial region identified in the first phase may be used (e.g., required). A hierarchical procedure may reduce overall processing used to search the same spatial region, which may save time and energy.

FIG. 6 is an example of a common framework of a SYNC signal for single and multi-beam operations.

One or more procedures may be used to indicate to a WTRU which mode (e.g., single beam or multi-beam) may be in use (e.g., for a common framework for single beam and multi-beam SYNC).

Various aspects of a SYNC signal may be used to indicate a beam operation mode. In an example, a WTRU may blindly detect SYNC (e.g., assuming single beam SYNC and multi-beam SYNC are in use), for example, given that the WTRU may not (e.g., initially) know whether single beam or multi-beam is in use. Various characteristics of a procedure may be used to determine the beam operation mode, e.g., once the WTRU detects SYNC. A WTRU may declare single beam operation mode, for example, when only the single beam SYNC is present and detected. A WTRU may (e.g., otherwise) declare multi-beam operation mode, for example, when multi-beam SYNC is present and detected.

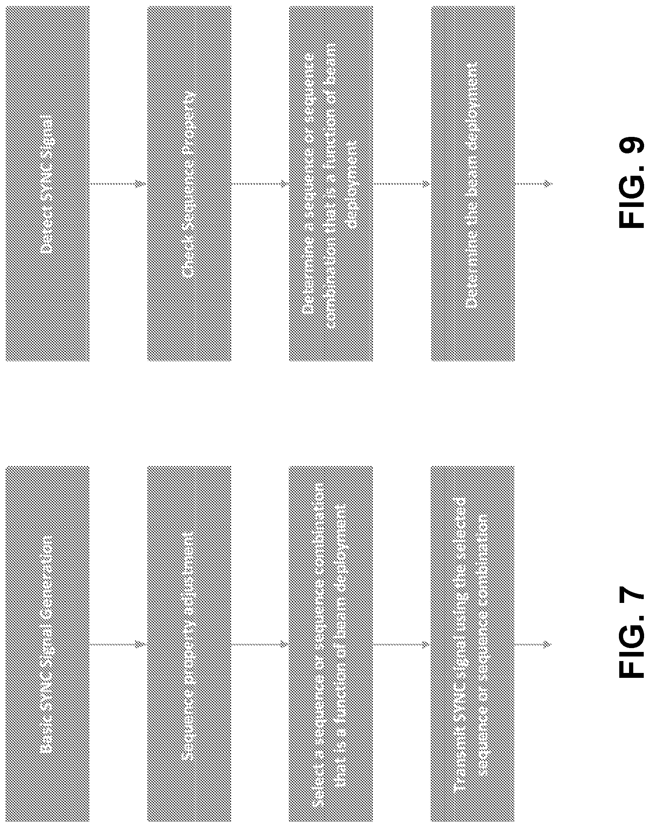

FIG. 7 is an example of a common framework of a SYNC signal generation procedure for single and multi-beam operations. A basic SYNC signal may be generated, for example, as shown in FIG. 7. A SYNC sequence property may be adjusted accordingly. A SYNC sequence or sequence combination may be selected as a function of beam deployment. In an example, a SYNC sequence with property A may be selected, for example, when it is a single beam deployment. A SYNC sequence with property B may be selected, for example, when it is a multi-beam deployment.

A WTRU may detect a SYNC operation mode (e.g., single beam or multi-beam), for example, using a variety of procedures, such as one or more of the following examples: (i) procedures for PSS and SSS Timing Differences; (ii) procedures for using different PSS sequences combined with cyclic shift and/or (iii) procedures for different combinations of X and Y components (e.g., m-sequences) for SSS1 and SSS2 or swapping SSS1 and SSS2 in different fashion.

Single beam SYNC and multi-beam SYNC may be differentiated, for example, by one or more (e.g., combination) of PSS and SSS time locations, frequency locations, sequences, sequence parameter(s), etc. For example, a different time offset for SSS may be used with respect to PSS, e.g., to indicate a beam operation mode. In an (e.g., another) example, different combinations of X and Y may be used for SSS1 and SSS2. For example, two combinations may be used to detect a frame boundary while the other two combinations may be used to indicate two beam deployments or operation modes.

In FIG. 8, the second block diagram shows an example SYNC signal burst set that may comprise SYNC signal bursts (or timeslot). For example, the second block diagram shows an example SYNC signal burst set that comprises N=5 SYNC signal bursts. SYNC signal bursts may be in a nonconsecutive or non-adjacent manner in time. A SYNC signal burst may comprise one or more SYNC signal sub-timeslots or SYNC signal symbols. For example, a SYNC signal burst may comprise M=3 SYNC signal symbols or SYNC signal sub-timeslots. One (e.g., only one) of SYNC signal symbols or SYNC signal sub-timeslots (e.g., the first SYNC signal symbol or SYNC signal sub-timeslot 801) may be transmitted. When the network operates in single beam mode, one (e.g., only one) of SYNC signal symbols or SYNC signal sub-timeslots (e.g., the first SYNC signal symbol or sub-timeslot 801) may be transmitted. More than one SYNC signal symbol or SYNC signal sub-timeslot may be transmitted. When the network operates in multi-beam mode, more than one SYNC signal symbol or SYNC signal sub-timeslot (e.g., the first SYNC signal symbol or SYNC signal sub-timeslot 801, and the remaining SYNC signal symbols or SYNC signal sub-timeslots 802) may be transmitted, as shown in the second block diagram of FIG. 8.

FIG. 8 is an example of a common unified framework of a SYNC signal burst for single and multi-beam operations.

Different multi-beam operation modes may be used for simultaneous multi-beam operations corresponding to multiple RF chains. A different beam sweep signal or burst corresponding to single or multiple RF chains may be determined, for example, based on a maximum number of simultaneous multi-beam capability(ies). Beam sweep may be performed for PSS and SSS.

FIG. 9 is an example of a common framework of a SYNC signal detection procedure for single and multi-beam operations. A SYNC signal may be detected, e.g., as shown in FIG. 9. A detected SYNC sequence property may be checked. A WTRU may determine a SYNC sequence or sequence combination, for example, based on a function of beam deployment. A WTRU may determine a (e.g., correct) beam deployment (e.g., a single or multi-beam deployment).

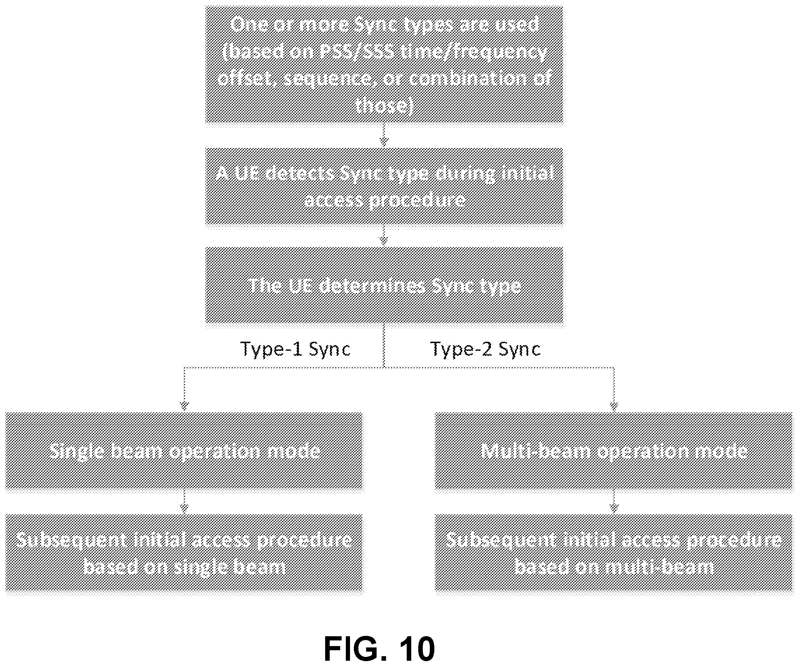

As shown in FIG. 10, one or more sync types may be used to indicate a mode of operation in a beam-based system. A WTRU may detect (e.g., blindly detect) one or more sync types. The sync type may be determined based on a time/frequency offset value between PSS and SSS; a sequence; and/or one or more sequence parameters. A first sync type may be associated with a single beam operation mode. A second sync type may be associated with a multi-beam operation mode. One or more sync types may be used for full and/or partial multi-beam operations.

Two types of sync burst regions may be used. For example, a first type of sync burst region may be based on one or more beams for sync signal transmission with Tx beam sweeping. A second type of sync burst region may be based on a single beam for sync signal with Rx beam sweeping. Two or more types of sync burst regions may be multiplexed in a time domain. For example, two or more types of sync burst regions may periodically be multiplexed in a time domain.

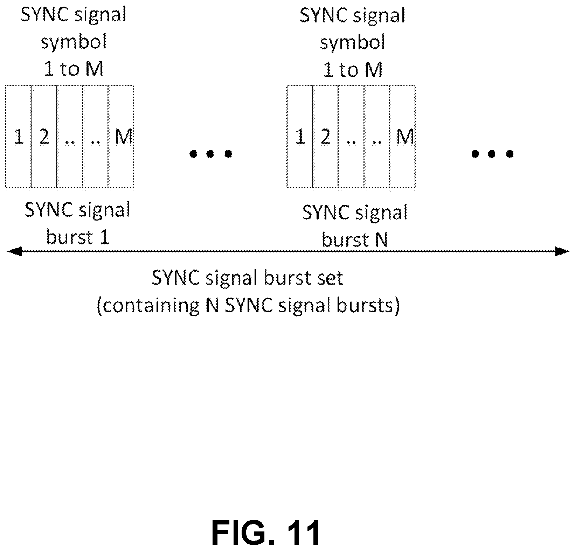

As described herein, a full SYNC signal burst or SYNC signal burst set may comprise SYNC signal bursts or timeslots. The SYNC signal bursts may comprise one or more SYNC signal sub-time slots or symbols in which a different beam may be transmitted, as shown in FIG. 11. A SYNC signal sub-timeslot or symbol may carry one or more SYNC signals, such as PSS and/or SSS. Locations (e.g., relative locations) of SYNC signals within a SYNC signal symbol or sub-timeslot may indicate a SYNC signal type. Based on the SYNC signal type, beam sweep type and/or order, ACK resource configuration info, PBCH behavior, beam hopping pattern, etc., may be indicated to the WTRU. The WTRU may detect a SYNC signal type to determine one or more of the following: beam sweep type and/or order, ACK resource configuration info, and/or PBCH behavior (e.g., beam hopping pattern).

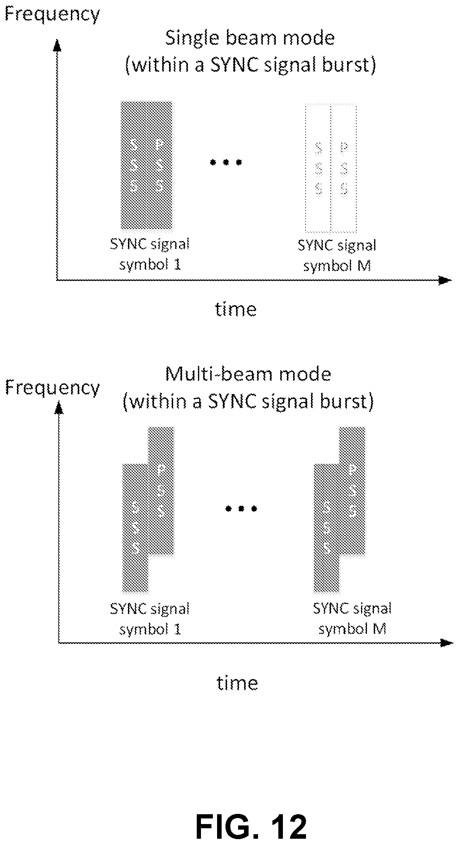

FIG. 12 shows an example of using a SYNC signal type to indicate a beam operation mode (e.g., a single or multi-beam) to the WTRU. For example, when SYNC signals (e.g., PSS and/or SSS) within a SYNC signal sub-timeslot or symbol have zero offset in frequency domain with respect to one other, a single beam mode may be indicated. When SYNC signals (e.g., PSS and/or SSS) within a SYNC signal sub-timeslot or symbol have a non-zero offset in a frequency domain with respect to one another, a multi-beam mode may be indicated. Different values of non-zero offsets in frequency and/or time domain may carry information (e.g., additional information).

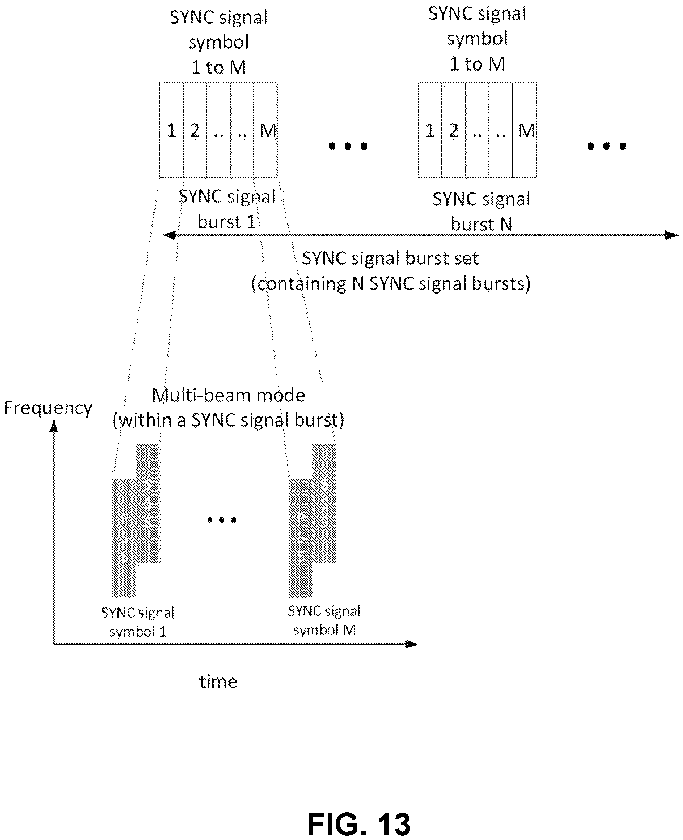

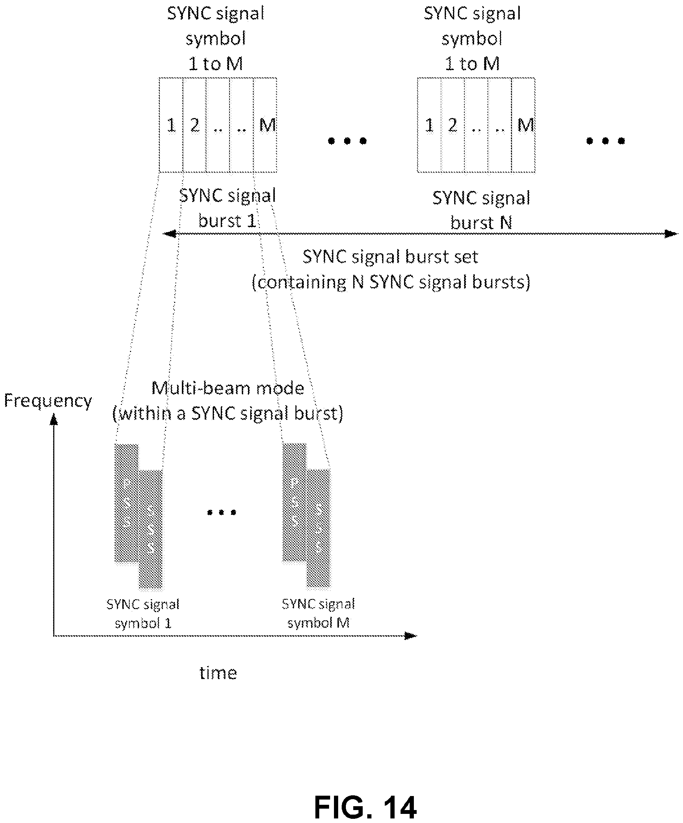

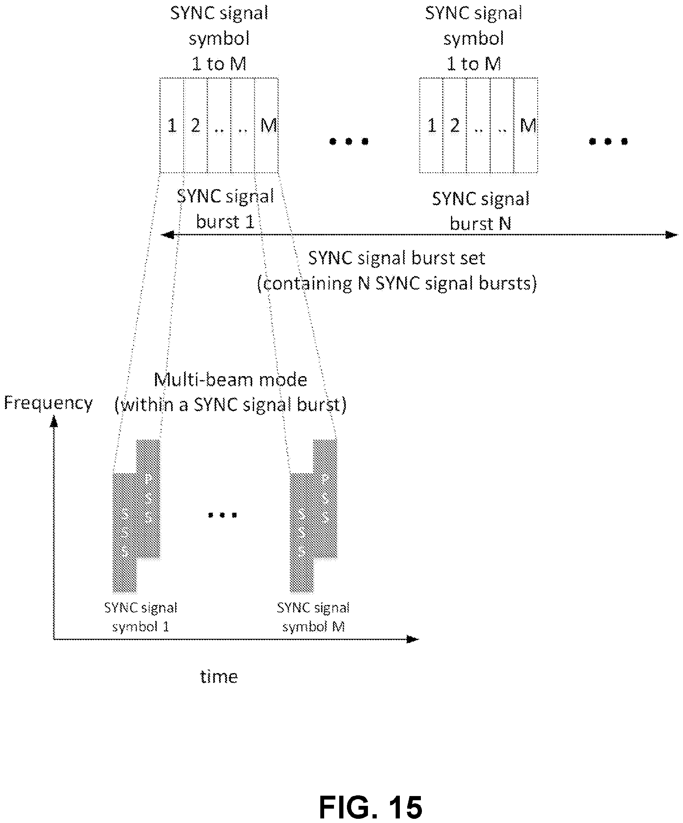

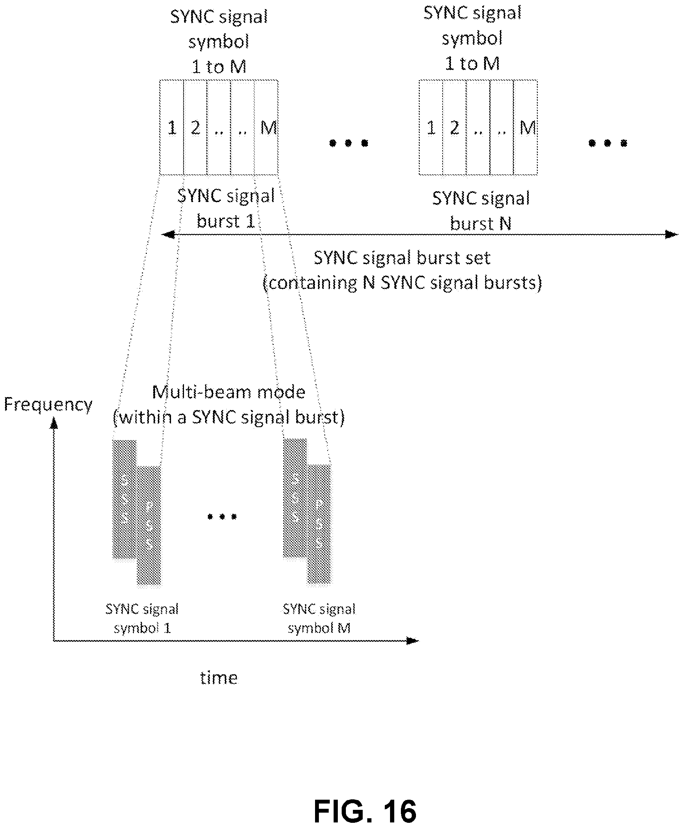

FIGs. 13-16 show example SYNC signal types according to the patterns of SYNC signals within a SYNC signal sub-timeslot or symbol of SYNC signal burst or timeslot. FIGs. 13-14 show SYNC signal types corresponding to different patterns specified by different offsets (e.g., different offsets between SYNC signals within SYNC signal sub-timeslot or symbol of SYNC signal burst). FIGs. 15-16 show SYNC signal types based on different patterns specified by swapping SYNC signals (e.g., SSS and/or PSS) within a SYNC signal sub-timeslot or symbol of a SYNC signal burst or timeslot. The WTRU may detect the SYNC signals within a SYNC signal sub-timeslot or symbol of a SYNC signal burst or timeslot. The WTRU may determine system information (e.g., corresponding system information) related to multi-beam operation. For example, if the WTRU detects SYNC signal type as in FIG. 13, the WTRU may determine beam sweeping pattern 1 and/or ACK resource configuration 1. If the WTRU detects SYNC signal type, as in FIG. 14, the WTRU may determine beam sweeping pattern 1 and ACK resource configuration 2. If the WTRU detects SYNC signal type, as in FIG. 15, the WTRU may determine beam sweeping pattern 2 and ACK resource configuration 1. If the WTRU detects SYNC signal type, as in FIG. 16, the WTRU may determine beam sweeping pattern 2 and ACK resource configuration 2.

A WTRU implementation may be provided. For example, one or more Sync types may be used. SYNC signal type may be based on a PSS/SSS frequency and/or time offset, sequences, sequence combinations, sequence parameters, and/or sequence repetition patterns.

A WTRU may detect and/or determine a Sync signal (e.g., a Sync signal type) based on a predetermined common unified SYNC signal burst structure, as described herein, and/or a default periodicity during initial synchronization.

A single beam operation mode may be indicated. For example, if the detected SYNC signal comprises the first SYNC signal type, a single beam operation mode may be indicated. A subsequent initial access implementation (e.g., based on a single beam) may be performed (e.g., fall back to legacy initial access implementation, LTE-like, no beam sweeping).

A multi-beam operation mode may be indicated. For example, if the detected SYNC signal comprises the second SYNC signal type, a multi-beam operation mode may be indicated. A subsequent initial access (e.g., based on multi-beam) implementation may be performed. For example, a corresponding beam sweep type and/or order, ACK resource configuration info, PBCH behavior, beam hopping patterns, etc., may be performed.

A common SYNC design may be provided for TDD and FDD. In an example, FDD: PSS/SSS in subframe 0 and 5, TDD: PSS in subframe 1 and 6 and SSS in subframe 0 and 5. Dynamic TDD frame structure design and operation may be considered. In an example of an FDD system (e.g., an FDD LTE system), an identical PSS may be located in the last OFDM symbol of the first and 11th slots of a (e.g., each) radio frame. Two different SSS may be located in a symbol (e.g., immediately) preceding the PSS. In an example of a TDD system (e.g., a TDD LTE system), an identical PSS may be located in the third symbol of the 3rd and 13rd slots of a (e.g., each) radio frame. Two different SSS may be located three symbols earlier than PSS.

Coherent detection of the SSS relative to the PSS may be applied in an FDD system, for example, when a channel coherence time may be larger than one OFDM symbol. Coherent detection of the SSS relative to the PSS may be applied in a TDD system, for example, when a channel coherence time may be larger than 4 OFDM symbols.

FDD and TDD systems may be distinguished, for example, by relatively different PSS and SSS symbol locations in the time domain. PSS and SSS symbol locations may be in the same frequency domain in LTE.

Several single-beam and multi-beam example deployments have been presented herein. Relative locations of PSS and SSS (e.g., besides the purpose of FDD and TDD separation) may (e.g., also) comprise an indication of single-beam or multi-beam deployment structures. Location separation of PSS and SSS may be in time domain or in frequency domain.

In an (e.g., first) example, time domain separation may be used to indicate TDD or FDD while frequency domain separation may be used to indicate single beam or multi-beam structures.

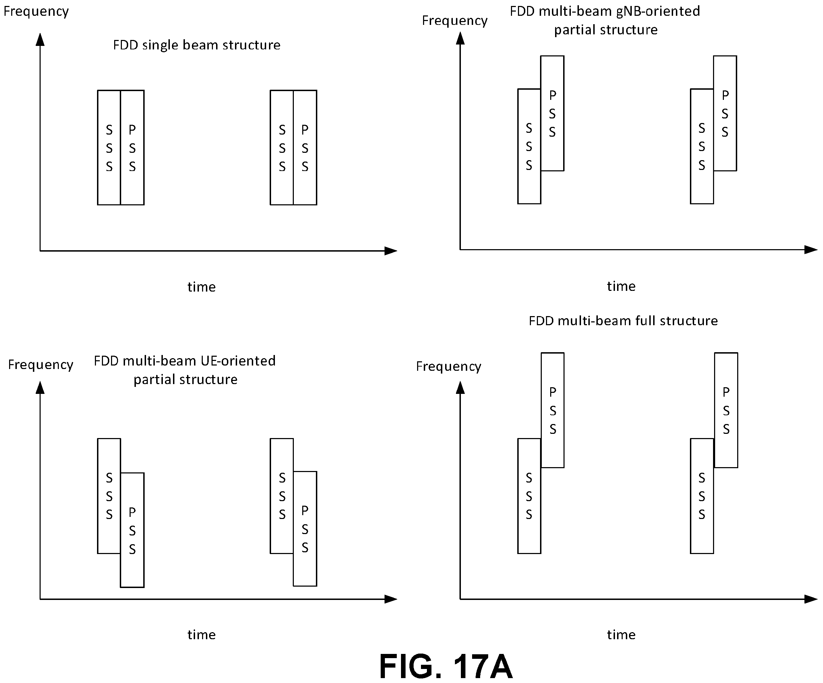

FIG. 17A is an example of a SYNC signal separations for FDD system. FIG. 17A shows an example for FDD systems to indicate single beam or multi-beam transmission structures.

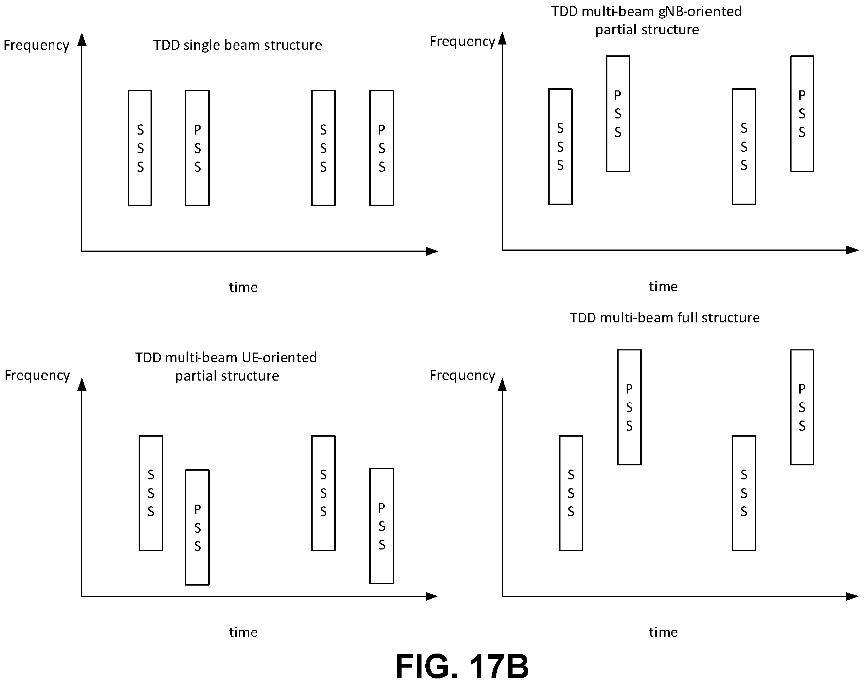

FIG. 17B is an example of a SYNC signal separations for TDD systems. FIG. 17B shows an example for TDD systems to indicate the single beam or multi-beam transmission structures.

In an (e.g., second) example, combined time and frequency domain separations of PSS and SSS may be used to indicate TDD or FDD and single beam or multi-beam structures.

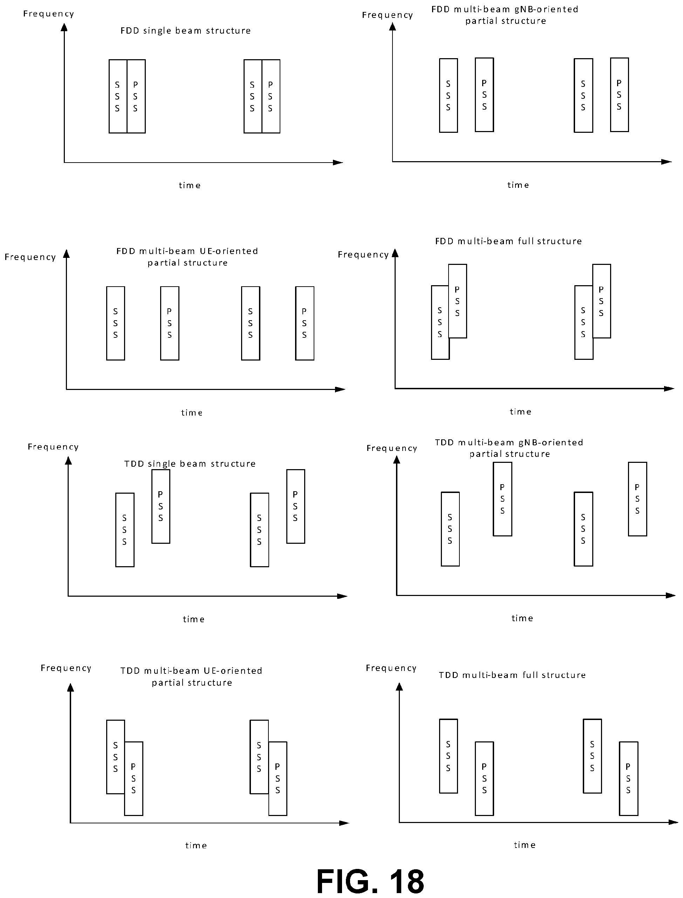

FIG. 18 is an example of SYNC signal separations for mixed FDD and TDD systems. FIG. 18 shows an example for mixed FDD and TDD systems, e.g., to indicate single beam or multi-beam transmission structures.

Different relative locations of PSS and SSS in frequency domain and time domain may be applied, for example, to indicate FDD/TDD modes and single beam and multi-beam structures. In an example, PSS and SSS sequences may be same as those used for an LTE example. Different PSS and SSS sequences may be applied, for example, to indicate FDD/TDD modes and/or single beam and multi-beam structures.

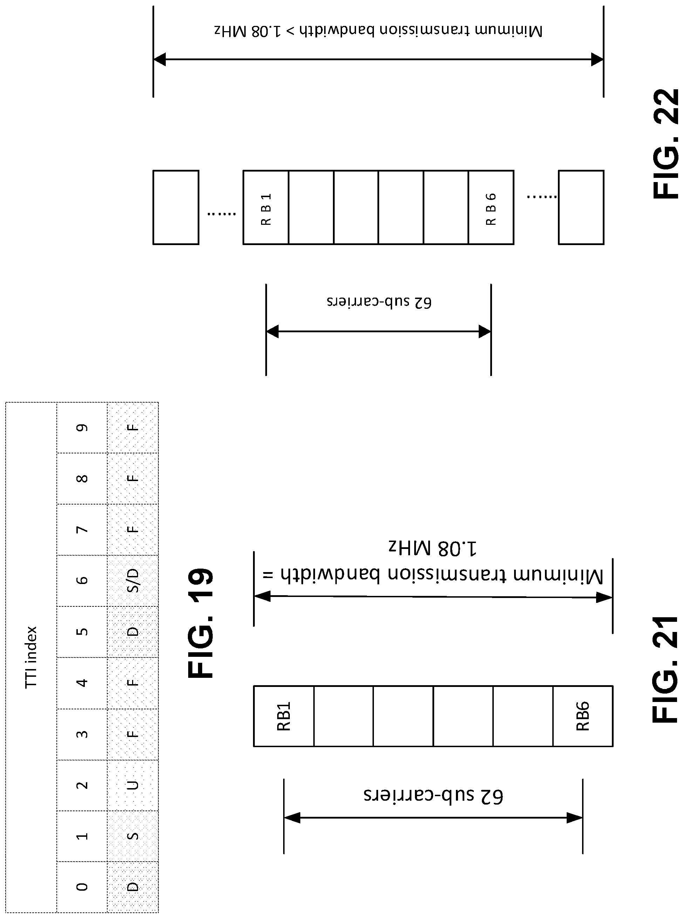

FIG. 19 is an example of a dynamic TDD frame structure. A dynamic TDD scheme may be used, for example, in NR. FIG. 19 shows an example of dynamic TDD, where D may indicate downlink transmission, U may indicate uplink transmission, $S$ may indicate a special subframe used for a guard time and $F$ may indicate flexible (e.g., downlink or uplink) transmission.

Three different PSS and SSS separation distances may be applied, for example, to distinguish FDD, (legacy or fixed) TDD and dynamic TDD operations. In an example, an FDD mode may be indicated (e.g., implied), for example, when SSS is $X_1$ symbol before PSS. A legacy TDD mode may be indicated, for example, when SSS is $X_2$ symbol before PSS. A dynamic TDD mode may be indicated, for example, when SSS is $X_3$ symbols before PSS. In an example, $X_1$, $X_2$ and $X_3$ may be three different values. The values may be small, for example, so that coherent detection of the SSS relative to the PSS may be applied in any mode. Blind detection of the SSS may be applied to distinguish two or more cases with different CP lengths at (e.g., all) three positions. In an example, $X_1$ may be a median of the set $\{X_1, X_2, X_3\}$, for example, so that legacy TDD mode and dynamic TDD mode may be separated with high reliability.

An indication of FDD, legacy TDD and dynamic TDD operations may be provided via relative locations of PSS and SSS in frequency domain, which may provide another example of combining FDD, legacy TDD and dynamic TDD with single beam and multi-beam structures while applying time domain and frequency domain separations of PSS and SSS to indicate the combinations.

A common SYNC may be provided for mixed numerologies. SYNC transmission bandwidth for a SYNC signal may be different according to frequency range. SYNC transmission bandwidth for a SYNC signal may (e.g., alternatively) be the same across multiple (e.g., all) frequency ranges. SYNC transmission bandwidth may be associated with corresponding numerologies. A SYNC transmission bandwidth may be blindly detected from specified bandwidths, e.g., according to frequency bands. Mixed numerologies (e.g., in NR) may apply several sub-carrier spacing values (e.g., 15 kHz, 30 kHz or 60 kHz) simultaneously within a given band. This may result in different OFDM symbol durations. A given band may be separated by several sub-bands. Sub-carrier spacing values in each sub-band may be different. Multiple SYNC signals, SYNC bursts/timeslots, SYNC symbols/sub-timeslots or SYNC burst sets may be transmitted in different bands or sub-bands. A band or sub-band may be a bandwidth part (BWP). This may support different types of users or applications. A SYNC signal may be provided for mixed numerologies.

In an example, a SYNC signal may (e.g., only) be placed in a (e.g., single) sub-band with a sub-carrier spacing (e.g., 15 kHz). This backward compatible design may enable LTE devices to (e.g., to also) receive the SYNC signals.

In an example, the corresponding sub-band may be more than 1.4 MHz, e.g., so that PSS/SSS signals (e.g., LTE PSS/SSS signals) maybe fit to this SYNC channel.

Detection of SYNC signals may be performed with larger sub-carrier spacing. For example, detection of SYNC signals with larger sub-carrier spacing may be faster than with smaller sub-carrier spacing. Detection of the SYNC signals may be based on larger sub-carrier spacing, for example, to achieve a better detection performance. Detection of the SYNC signals may be based on larger sub-carrier spacing at the cost of no backward compatibility. For example, detection of the SYNC signals may require an increased minimum supported bandwidth (e.g., larger than 1.4 MHz). Also, or alternatively, to be compatible to the 1.4 MHz bandwidth, the length of the SYNC sequence may be reduced. For example, the length of SYNC sequence may be divided in half for the subcarrier spacing of 30 KHz of the length of SYNC sequence for the subcarrier spacing of 15 KHz. Reducing the length of the SYNC sequence may result in a degraded detection performance. The sub-carrier spacing design for SYNC signals and/or the length of the SYNC sequence may be balanced. For example, the sub-carrier spacing design for SYNC signals and/or the length of the SYNC sequence may be balanced so that a predefined (e.g., best) detection performance may be achieved. The tradeoff may depend on the carrier frequency of the operating band. For example, the tradeoff may depend on the carrier frequency of the operating band because the phase noise and/or frequency offset may increase with the carrier frequency. The phase noise and/or frequency offset may affect the detection of the SYNC signals.

In an (e.g., alternative) example, a SYNC signal may be placed to a (e.g., each) sub-band with its own sub-carrier spacing. PSS/SSS sequences for each sub-band may be different from each other or the relative locations of PSS sequences and SSS sequences for each sub-band could be different from each other. Multiple SYNC signals, SYNC bursts/timeslots, SYNC symbols/sub-timeslots or SYNC burst sets may be transmitted in different bands or sub-bands. A band or sub-band may be a bandwidth part

(BWP).

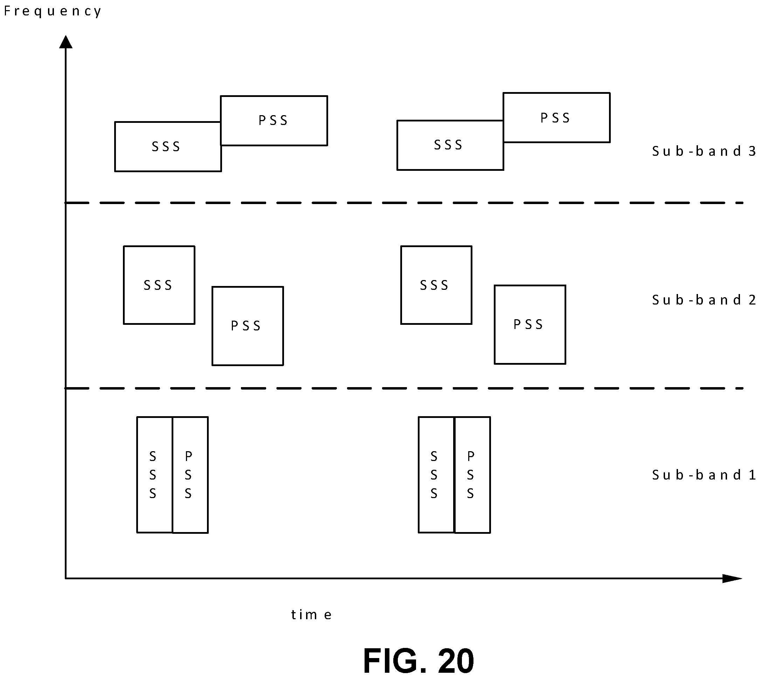

FIG. 20 is an example of SYNC signal separations for different sub-bands with different numerologies. FIG. 20 shows an example where different sub-bands may have different SYNC signal allocations.

SYNC may be provided for larger bandwidth. In an example, a system (e.g., an LTE system) may operate on a carrier frequency less than 6GHz. This range of frequency may be crowded and little frequency band may be available. In another example (e.g., NR), a carrier frequency may be extended to 100 GHz, which may provide far more bandwidth.

A minimum bandwidth (e.g., in NR) may depend on carrier frequency. In an example, a minimum bandwidth may be 1.4 MHz, for example, when a carrier frequency may be below 6GHz. A minimum bandwidth may be $X_1$ MHz, for example, when a carrier frequency may be $f_1$ GHz, e.g., where $f_1 > 6$ and $X_1 > 1.4$. A minimum bandwidth may be $X_2$ MHz, for example, when carrier frequency may be $f_2$ GHz, e.g., where $f_2 > f_1$ and $X_2 > X_1$.

SYNC signals may be transmitted (e.g., in LTE) in the center 6 RBs (or 62 subcarriers). An implementation may be compatible with a minimum bandwidth of 1.4 MHz. In an example, the center 6 RBs may occupy 1.08 MHz minimum transmission bandwidth. A PSS may use Zadoff-Chu sequences of length 63 and a SSS (e.g., LTE SSS) may use a combination of 2 M-sequences of length 31. This may match the 62 subcarriers allocated to SYNC signals. The DC component for ZC sequence may be ignored.

SYNC signals may have a larger transmission bandwidth, for example, for a larger minimum bandwidth, e.g., at higher carrier frequency.

A sequence called low density power boosted (LDPB) may be used. The LDPB sequence may be based on a Costas array of size $P \times (P - 1)$, for some prime number P. A Costas array may have non-zero elements, denoted by $f_n = mod(\alpha^n, P) - 1$, for n = 0,1, ..., $P - 2$, at each column. The $\alpha$ may be a primitive root of the Galois Field GF(P). For example, the LDPB sequence may be length 42 for P = 7 and/or length 110 for P = 11. The primitive root $\alpha$ may be used to represent the cell ID within a cell ID group. For example, there may be one or more (e.g., two) primitive roots of GF(7). This may be used to represent two cell IDs within a cell ID group.

FIG. 21 is an example of SYNC signals in the frequency domain. Multiple SYNC signals, SYNC bursts/timeslots, SYNC symbols/sub-timeslots or SYNC burst sets may be transmitted in different spectrums, frequency bands or sub-bands. A spectrum, band or sub-band may be a bandwidth part (BWP).

PSS/SSS signals may be extended in a variety of ways for a larger bandwidth.

FIG. 22 is an example of SYNC signals in the frequency domain with an extension. In an example, the same PSS/SSS sequences (e.g., as may be applied for LTE), which have 62 symbols, may be applied for a larger bandwidth. The 62 subcarriers may (e.g., still) be located at the center of an operation band. An example of this simple extension (e.g., of an LTE example) is shown in FIG. 22. The PSS may be from LDPB sequence of 42 symbols, where the symbols may be placed at the center (e.g., 4 RBs) of the operation band.

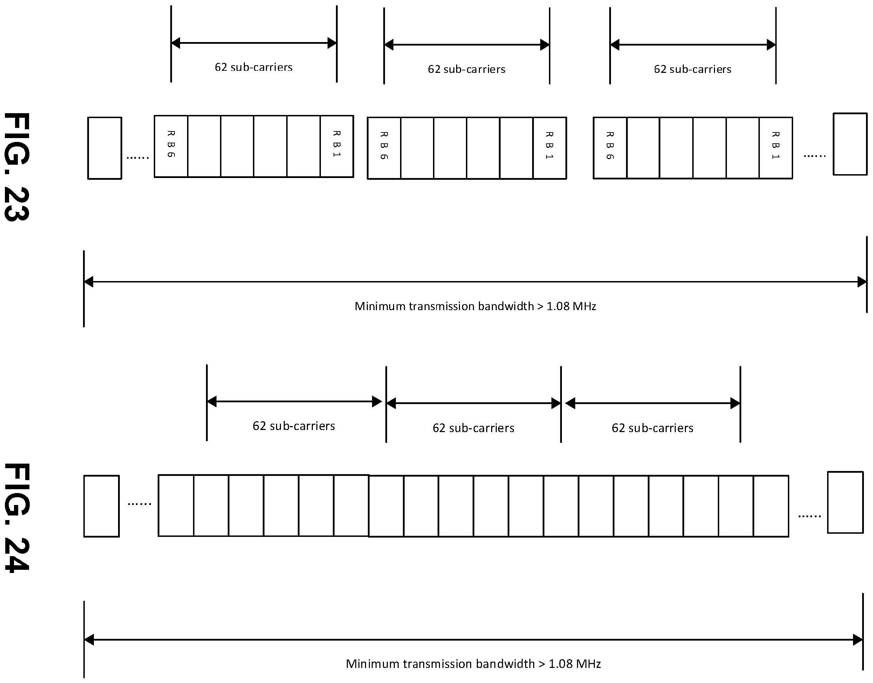

FIG. 23 is an example of SYNC signals in the frequency domain with repetition at RB level. In an example, the same PSS/SSS sequences (e.g., as may be applied for LTE) may be used with multiple copies of RBs comprising PSS/SSS sequences placed within a minimum transmission bandwidth. Two neighbor RBs with PSS/SSS sequences may be connected to each other in the frequency domain or a guard band may be applied between two neighbor PSS/SSS sequences. Misalignment of two neighbor RBs with PSS/SSS sequences may be avoided, for example, by applying different power levels on different copies of PSS/SSS sequences. For example, a PSS/SSS sequence at band center may have the strongest power, its neighbor copy of PSS/SSS sequence may have a weaker power, etc. An example of this is shown in FIG. 23. The PSS may be from LDPB sequence of 42 symbols (or 4 RBs). The concatenation of the 4 RBs with LDPB sequence may be applied.

FIG. 24 is an example of SYNC signals in the frequency domain with repetition at subcarrier level. In an example, repetition of PSS/SSS signals may be at subcarrier level. A PSS/SSS symbol from one copy may be in a subcarrier next to a PSS/SSS symbol from another copy. An example of this is shown in FIG. 24. This may be considered a simple repetition of the PSS/SSS sequence itself. For example, an original PSS or SSS sequence may be $P_1, ..., P_{62}$. The subcarriers having PSS or SSS sequence may have symbols $P_1, ..., P_{62}, P_1, ..., P_{62}, P_1, ..., P_{62}, ... ...$ The PSS may be from LDPB sequence of 42 symbols. If the original LDPB sequence is $P_1, ..., P_{42}$, the subcarriers having a PSS sequence may have symbols $P_1, ..., P_{42}, P_1, ..., P_{42}, P_1, ..., P_{42}, ... ...$

In an example, a PSS/SSS sequence may be repeated so that the i-th symbol in a copy of a PSS/SSS sequence may be connected to the i-th symbol in another copy of a PSS/SSS sequence. An original PSS or SSS sequence may be $P_1, ..., P_{62}$. Subcarriers having a PSS or SSS sequence may have symbols $P_1, ..., P_1, P_2, ..., P_2, ... ..., P_{62}, ..., P_{62}$. The PSS may be from LDPB sequence of 42 symbols. If the original LDPB sequence is $P_1, ..., P_{42}$, the subcarriers having a PSS sequence in this scheme may have symbols $P_1, ..., P_1, P_2, ..., P_2, ... ..., P_{42}, ..., P_{42}$.

In an example, a Zadoff-Chu (ZC) sequence length may be extended for a PSS signal. A ZC sequence of odd-length $N_{ZC}$ may be given by

$$a_q(n) = \exp(-j2\pi q \frac{\frac{n(n+1)}{2}+ln}{N_{ZC}})$$

, where $q \in \{1, ..., N_{ZC} - 1\}$ may be a ZC sequence root index and $n = 0, 1, ..., N_{ZC} - 1$ and $l$ may be an integer. In an example (e.g., for LTE), $N_{ZC} = 63$, $l = 0$ and $q = 25, 29, 34$.

The size of $N_{ZC}$ may be increased, for example, with a larger SYNC signal bandwidth (e.g., in NR). The number of q values may be increased, which may increase the capacity of a SYNC channel. In an example, a selection may be $N_{ZC} = 251$ (e.g., a prime number) for example, when a SYNC signal bandwidth may be larger than 256 subcarriers. This may provide, for example, more than three choices of ZC sequence roots.

In an example, there may be Q sequence roots, which may carry $\log_2 Q$ bit information. A PSS signal may carry (e.g., besides original LTE system information of cell ID within a cell group) beam information, *e.g.,* multi-beam full SYNC signal, multi-beam partial SYNC type 1, multi-beam partial SYNC type 2, single beam SYNC, etc. In an example where $q_1, q_2, ... q_Q$ may be Q possible values of ZC sequence roots: (i) $q_1, q_2, q_3$ may indicate a cell ID 1,2,3 within a cell group and single beam SYNC signal; (ii) $q_4, q_5, q_6$ may indicate a cell ID 1,2,3 within a cell group and multi-beam full SYNC signal; (iii) $q_7, q_8, q_9$ may indicate a cell ID 1,2,3 within a cell group and multi-beam partial SYNC type 1 and (iv) $q_{10}, q_{11}, q_{12}$ may indicate a cell ID 1,2,3 within a cell group and multi-beam partial SYNC type 2. RACH related configuration information and/or other important system information may be carried in the PSS signal.

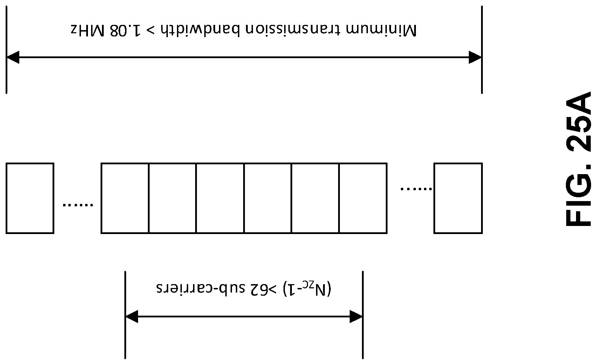

FIG. 25A is an example of SYNC signals in the frequency domain with increased ZC sequence. FIG. 25A shows an example where a ZC sequence has length larger than 63.

The same sequence extension scheme (e.g., the ZC sequence having a length larger than 63) may be applied to LDPB sequences. For example, the prime number P may be selected to match the bandwidth. The number of primitive roots in GF(P) may increase. For example, with the increase of the prime number $P$, the number of primitive roots in GF(P) may increase. The number of primitive roots in GF(P) may increase due to the uniform increase of the Euler's totient function. The primitive roots may carry cell ID information and/or beam information. For example, the number of primitive roots in GF(23) may be ten. The ten roots (e.g., distinct roots) may be used to indicate cell ID and/or beam information. For example, the first three roots may indicate the cell ID 1,2,3 (within a cell group) and/or a single beam SYNC signal. The next three roots may indicate the cell ID 1,2,3 and/or a multi-beam full SYNC signal, etc.

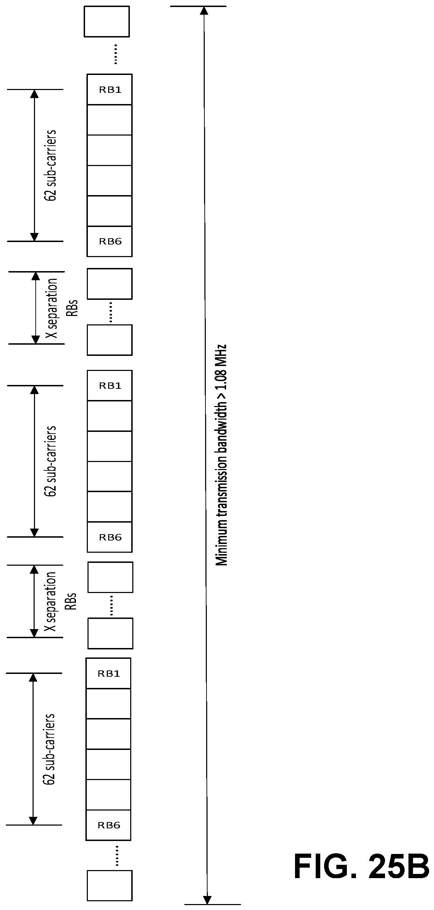

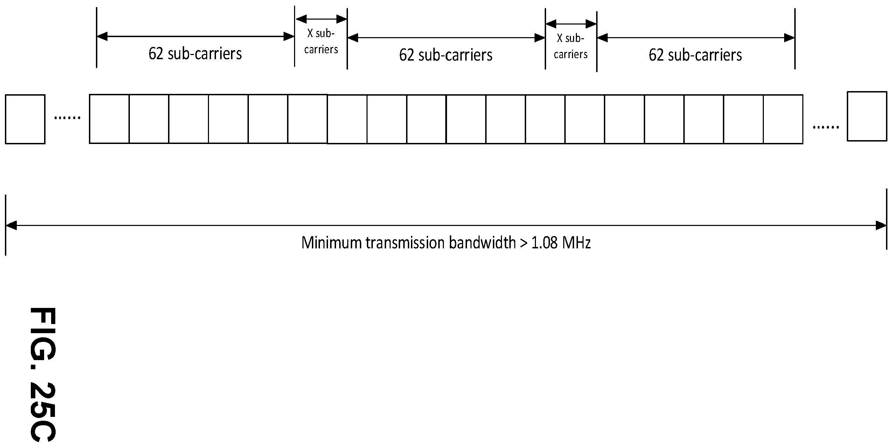

As described above, SYNC signals (e.g., the repeated SYNC signals) may be placed contiguously. The SYNC signals (e.g., the repeated SYNC signals) may not be placed contiguously. For example, as shown in FIG. 25B, for the repetition at RB level, the separation of the repeated SYNC may be *of X* RBs. The value of $X$ may be used to indicate the beam information. For example, $X = 1$ may indicate a single beam SYNC signal; $X = 2$ may indicate a multi-beam partial SYNC type 1; $X = 3$ may indicate a multi-beam partial SYNC type 2; $X = 4$ may indicate a multi-beam full SYNC, etc. As shown in FIG. 25C, the above schemes may be applied to a case of repetition at a subcarrier level. The above schemes may apply to a ZC sequence and/or to a LDPB sequence.

As described herein, ZC and/or LDPB sequences (e.g., the same ZC and/or LDPB sequences) may be repeated. The shifted version of ZC and/or LDPB sequences may be used. For example, rather than the same ZC and/or LDPB sequences, the shifted version of ZC and/or LDPB sequences may be used at the RB level and/or at subcarrier level. The shifted value may carry the beam information. For example, if the original ZC sequence is $P_1, ..., P_{62}$ and three ZC sequences are contiguously concatenated, placement of the SYNC signals may be

$$[P_5, \dots, P_{62}, P_1, P_2, P_3, P_4, \qquad P_1, \dots, P_{62}, \qquad P_5, \dots, P_{62}, P_1, P_2, P_3, P_4]$$

or

$$[P_1, \dots, P_{62}, \qquad P_5, \dots, P_{62}, P_1, P_2, P_3, P_4, \qquad P_{10}, \dots, P_{62}, P_1, \dots, P_9].$$

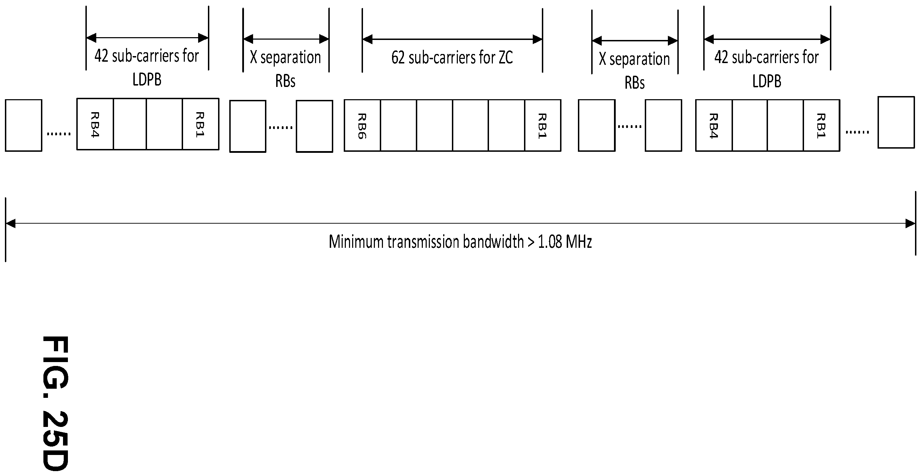

The ZC sequence and/or the LDPB sequence may be used (e.g., jointly used). FIG. 25D shows an example of a mixed usage of a ZC sequence and a LDPB sequence. For example, FIG. 25D shows an example of a mixed usage of a ZC sequence and a LDPB sequence at the RB level. A center ZC sequence may be surrounded by two or more LDPB sequences with a separation of X RBs. For example, a center ZC sequence may be surrounded by two or more LDPB sequences with a separation of $X$ RBs to carry beam information. The scheme (e.g., the same scheme) may be applied to the subcarrier level, as in FIG. 25C.

The value m of an m-sequence may (e.g., also) be extended for SSS, for example, for large SYNC signal bandwidth. An example system (e.g., LTE) may use interleaved concatenation of two length-31 binary sequences for SSS. The number of overall subcarriers used for SSS may (e.g., also) be 62. These length-31 binary sequences may be generated, for example, based on length-31 m-sequences. There may be 168 combinations of $m_0$, $m_1$ values, where $0 \leq m_0, m_1 \leq 30 = m - 1$, that may be uses for different shifts of the m-sequences. This may indicate 168 valid cell group IDs.

In an example that may use an m'-sequence, with m' > m, an SSS signal may occupy 2m' subcarriers (e.g., applying the same interleaved concatenation operations). An m' value may be configured reversely, for example, based on an available SYNC channel bandwidth. A PSS and SSS may occupy the same number of subcarriers, which may provide 2m' = $N_{ZC} - 1$.

An increase of m' from m may provide more combinations of $m_0$, $m_1$ values, where $0 \leq m_0, m_1 \leq$ m' - 1, which may be used for different shifts of the m'-sequences. This may carry information of more than 168 valid cell group IDs. Additional information carried in an SSS signal may be beam information, e.g., multi-beam full SYNC signal, multi-beam partial SYNC type 1, multi-beam partial SYNC type 2, single beam SYNC, etc. RACH related configuration information or other important system information may be carried in the SSS signal.

The M-sequence (e.g., the original M-sequence) may be scrambled by a cell ID group. As described herein, an SSS (e.g., an LTE SSS) may use one or more (e.g., a combination of two) M-sequences of length 31. The M-sequences of length 31 (*e.g.*, two M-sequences of length 31) may be interleaved to create an SS sequence (e.g., a single long SSS sequence). d(2n) and d(2n+1) may refer to the two M-sequences. d(2n) and d(2n+1), for example, may be defined as:

$$d(2n) = \begin{cases} s_0^{(m_0)}(n)c_0(n) & \text{in subframes } 0, 1, 2, 3, 4 \\ s_1^{(m_1)}(n)c_0(n) & \text{in subframes } 5, 6, 7, 8, 9 \end{cases}$$

$$d(2n+1) = \begin{cases} s_1^{(m_1)}(n)c_1(n)z_1^{(m_0)}(n) & \text{in subframes } 0, 1, 2, 3, 4 \\ s_0^{(m_0)}(n)c_1(n)z_1^{(m_1)}(n) & \text{in subframes } 5, 6, 7, 8, 9 \end{cases}$$

where ($s_0$, $s_1$), ($c_0$, $c_1$), ($z_0$, $z_1$) may be a different cyclic shifted m-sequence with shift value depending on the cell ID group. Such a scrambling operations may be done without cell ID group based scrambling.

A SYNC Design for a smaller bandwidth may be provided.

As described herein, a minimum bandwidth may be increased. For example, the system bandwidth (e.g., the minimum system bandwidth) may be less than 1.4 MHz. The length of PSS and/or SSS sequences may be reduced (e.g., may need to be reduced). Shorter length ZC sequences (i.e., a smaller $N_{ZC}$ value) may be used and/or shorter length LDPB sequences (i.e., smaller prime number P value) may be used. The existing ZC sequence and/or the LDPB sequence may be truncated. For example, if the original ZC sequence is $P_1$, ..., $P_{62}$, the shortened ZC sequence may be $P_5$, $P_6$, ..., $P_{58}$ (e.g., the original ZC sequence may be truncated, such as equally truncated, from both sides).

SYNC transmission and reception may be provided for single and multiple TRPs. A SYNC signal may be used to detect a (e.g., NR) cell ID. A (e.g., NR) cell may correspond to one or multiple TRPs. Initial time/frequency synchronization of a cell may consist of one or more TRPs that may be obtained by a (e.g., NR) SYNC signal. Multiple TRP deployment may be provided. TRPs may belong to the same cell and may share the same cell ID. A SYNC signal procedure may handle a multiple TRP deployment scenario.

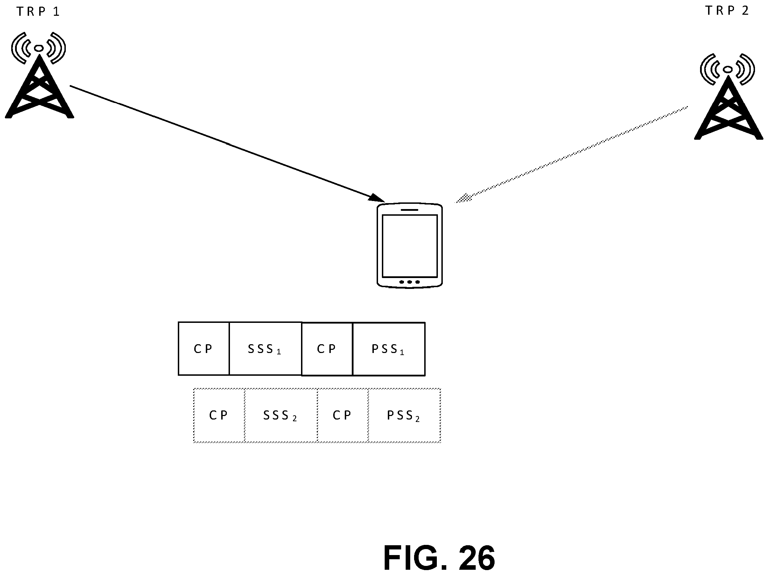

FIG. 26 is an example of a deployment of multiple TRPs with a signal SYNC beam. In an example of a multiple TRP environment, the coverage of TRPs may be overlapped. FIG. 26 shows an example of a multiple TRP deployment, where each of multiple TRPs may be deployed with a single SYNC beam. A WTRU may receive the same SYNC signal from multiple TRPs, as they may belong to the same cell. A WTRU may combine its received SYNC signals, e.g., to achieve a better synchronization performance. A WTRU may combine SYNC signals, for example, when a CP length may be larger than a maximum time difference of receiving the signals from these TRPs. A CP length should be set to be large enough, such as to the extended CP length.

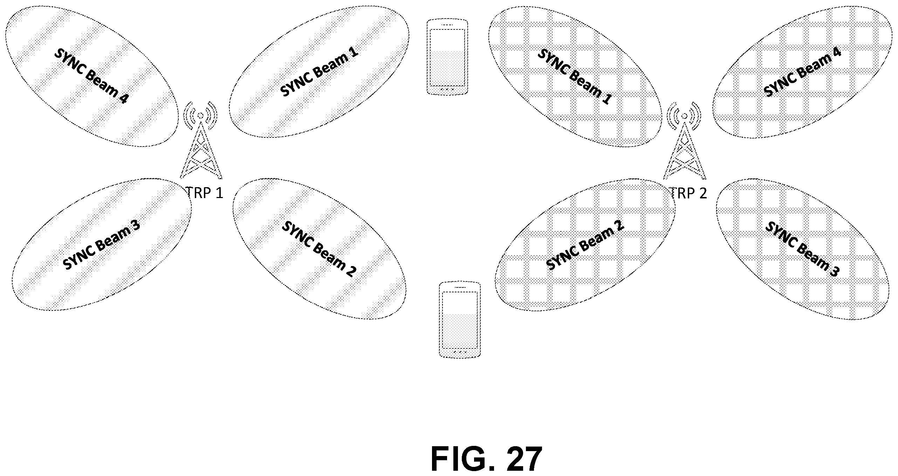

FIG. 27 is an example of a deployment of multiple TRPs with multiple SYNC beams with synchronous transmission. Coordination among TRPs may be applied, for example, when TRPs may have multiple beams.

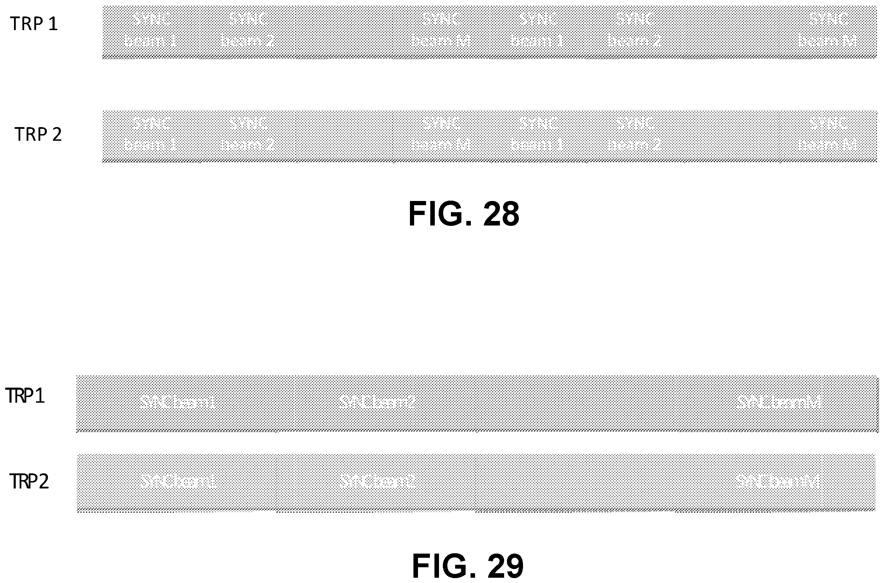

An example of a first type of coordination may be, for example, coordinating synchronous transmissions of certain beams to cover common areas. FIG. 27 shows an example of two TRPs, each with four SYNC beams. SYNC beam 1 from TRP1 and SYNC beam 1 from TRP2 may point to a similar area. SYNC beam 2 from TRP1 and SYNC beam 2 from TRP2 may point to another similar area. TRP1 and TRP2 may synchronize on their SYNC beam transmissions, for example, to strengthen the SYNC signal in these common areas. In an example, TRP 1 and TRP 2 may arrange the order of their SYNC beam transmission so that the SYNC beam 1 and SYNC beam 2 from both TRPs may be sent at the same time, for example, for multi-beam full SYNC signals or multi-beam partial SYNC signal Type 1. This example is shown in FIG. 28. A similar synchronous transmissions for multi-beam partial SYNC signal Type 2 is shown in FIG. 29.

FIG. 28 is an example of joint transmissions for multi-beam full SYNC signal or multi-beam partial SYNC signal Type 1.

FIG. 29 is an example of joint transmissions for multi-beam partial SYNC signal Type 2.

The example of the first type of coordination may enhance the SYNC signal in certain overlapped areas. An example of a second type of coordination may reduce the number of SYNC beams by each TRP. In an example deployment (e.g., as shown in FIG. 27), TRP1 or TRP2 may send a corresponding SYNC beam, e.g., since beam 1 of TRP1 or beam 1 of TRP2 may cover the common area. Similarly, TRP1 or TRP 2 may send their respective beam 2 to cover the common area. This may be referred to as an alternative transmission scheme, e.g., compared to the synchronous transmission scheme previously discussed.

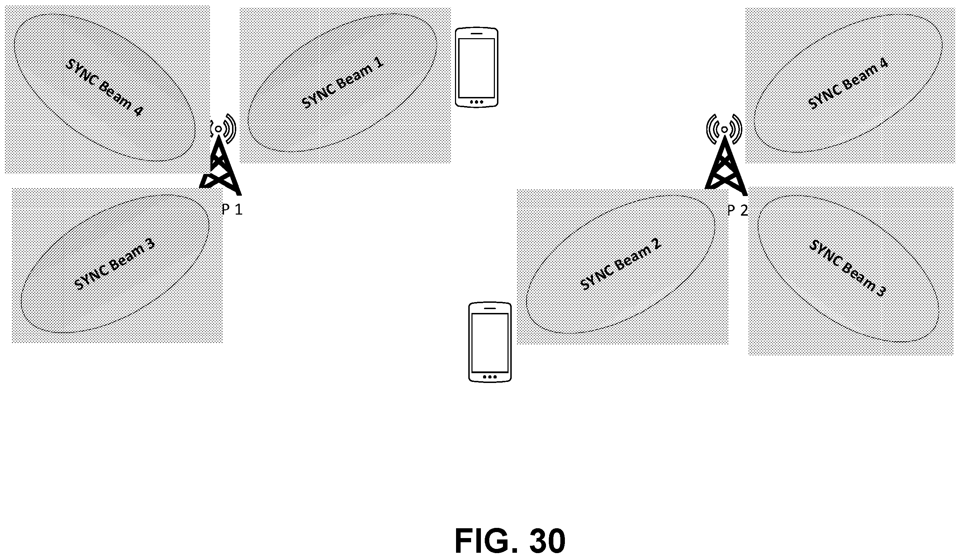

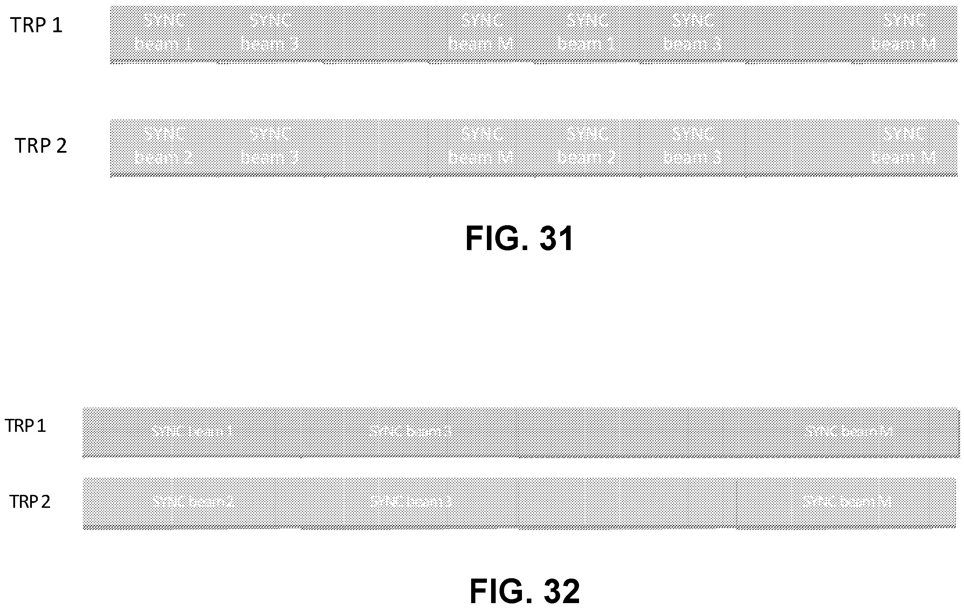

Sharing a load of SYNC signal coverage may occur in the spatial domain. In an example, TRP1 may not transmit SYNC beam 2, for example, when this area may be (e.g., is) covered by SYNC beam 2 from TRP2. Similarly, TRP2 may not transmit SYNC beam 1, for example, when this area may be covered by SYNC beam 1 from TRP1. This is shown by way of example in FIG. 30, with a corresponding beam transmission schedule shown by examples in FIG. 31 (*e.g.*, for the multi-beam full SYNC signal or multi-beam partial SYNC signal Type 1) and FIG. 32 (e.g., for the multi-beam partial SYNC signal Type 2).

FIG. 30 is an example of a deployment of multiple TRPs with multiple SYNC beams and alternative transmissions in the spatial domain.

FIG. 31 is an example of spatial domain sharing for a multi-beam full SYNC signal or a multi-beam partial SYNC signal Type 1.

FIG. 32 is an example of a spatial domain sharing for multi-beam partial SYNC signal Type 2.

Sharing a load of SYNC signal coverage may (e.g., also) occur in the time domain. In an example, , TRP1 may transmit multiple (e.g., all) of its SYNC beams at certain time period while TRP2 may skip the transmission of its SYNC beam 1 and SYNC beam 2, e.g., since they may be covered by TRP1. TRP2 may (e.g., at another time period) transmit multiple (e.g., all) of its SYNC beams while TRP1 may skip the transmission of its SYNC beam 1 and SYNC beam 2, e.g., since they may be covered by TRP2.

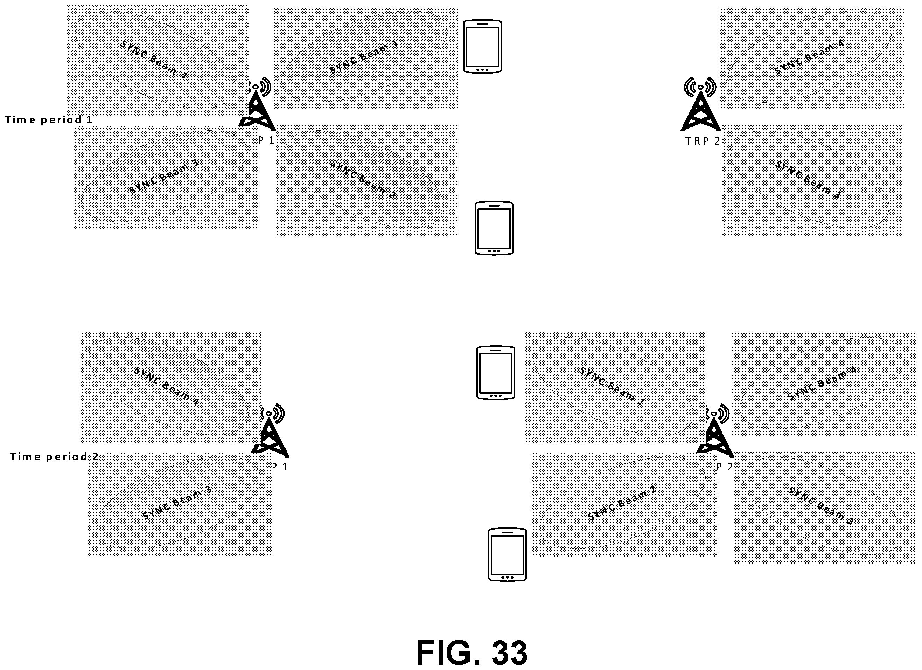

FIG. 33 is an example of a deployment of multiple TRPs with multiple SYNC beams and alternative transmissions in the time domain.

Alternative coverage in the time domain and alternative coverage in the spatial domain may be combined or mixed to provide greater diversity.

TRP1 and TRP2 may (e.g., must) have knowledge that their beam coverage overlaps, for example, in support of one or more synchronous transmission schemes and/or alternative transmissions schemes. This knowledge may be pre-configured, for example, at the TRP deployment stage. This knowledge may be dynamically obtained, for example, via a communication between TRPs and/or with WTRU feedback on SYNC signals.

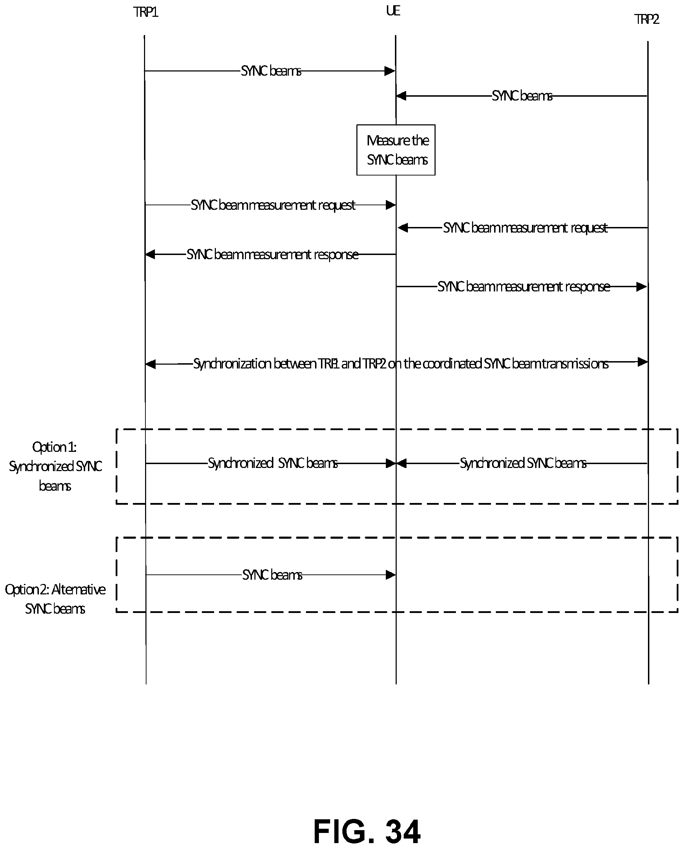

FIG. 34 is an example of a procedure for TRPs to gain knowledge of their SYNC beam overlap. A WTRU may provide support in an example procedure to obtain this knowledge.

TRP 1 and TRP 2 may (e.g., initially) transmit their SYNC signals without coordination.

A WTRU in a common coverage area of TRP1 and TRP2 may measure the SYNC beams from both TRPs. Measurement may occur at different times and with different AoA and ZoA.

TRP1/TRP2 may send a SYNC beam measurement request to a WTRU to collect beam coverage information at the WTRU's location.

The WTRU may send (e.g., detailed) information of its measured SYNC beams to TRP1/TRP2.

TRP1 and TRP2 may (e.g., based on the received SYNC beam information) may try to coordinate their beam transmission schemes. In an example, an outcome may be synchronous SYNC beam transmissions or alternative (e.g., alternating) SYNC beam transmissions. TRP1 and TRP2 may (e.g., for synchronous SYNC beam transmission) adjust their SYNC beam transmission orders so that their respective SYNC beam towards a common coverage area may be transmitted at the same time. TRP1 or TRP2 may (e.g., for alternative SYNC beam transmission) may stop transmitting a SYNC beam towards a common coverage area or direction at certain time period.

Although examples discuss two TRPs, subject matter discussed herein (e.g., schemes) may be extended to more than two TRPs. TRP(s) may use one or more SYNC burst structures (e.g., a TRP or UE-oriented structure; a hybrid structure; a hierarchical structure, etc.). An anchor cell and/or carrier may assist and/or configure SYNC burst structures. For example, an anchor cell and/or carrier may assist and/or configure SYNC burst structures for TRPs to optimize system performance and/or address one or more applications/scenarios (e.g., latency). For example, an anchor cell and/or carrier may assist and/or configure a SYNC operation, such as a hybrid and/or hierarchical SYNC operation.

A Hybrid SYNC operation may be provided.

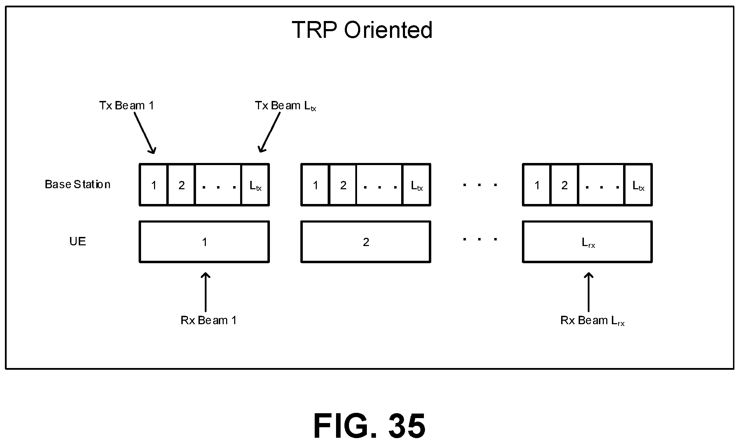

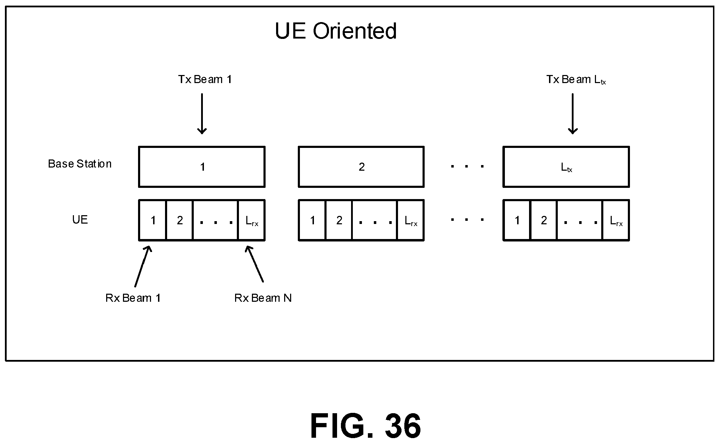

As described herein, SYNC burst structures and/or patterns may be utilized for multi-beam synchronizations. The structures may be TRP-oriented and/or WTRU-oriented. In the TRP-oriented case $L_{TX}$ beam directions may be transmitted (e.g., transmitted sequentially) during a SYNC burst. To perform the synchronization, a WTRU may receive from one or more of $L_{RX}$ beam directions during a SYNC burst. A sweep iteration, as shown in FIG. 35, may take $L_{RX}$ SYNC periods to complete. In the WTRU-oriented case, a WTRU may receive (e.g., sequentially receive) from one or more of $L_{RX}$ beam directions during a SYNC burst time. The synchronization may be performed with the TRP transmitting from a $L_{TX}$ beam direction during a SYNC burst. For example, the synchronization may be performed with the TRP transmitting from a $L_{TX}$ beam direction during a SYNC burst so that a sweep iteration (e.g., single sweep iteration) may take $L_{TX}$ SYNC periods to complete. An example of this configuration is shown in FIG. 36.

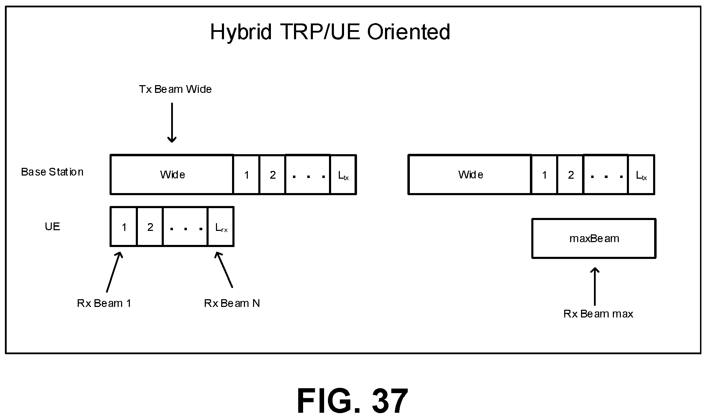

A hybrid TRP/WTRU-oriented structure may be utilized. For example, a hybrid TRP/WTRU-oriented structure may be utilized to reduce the time to perform (e.g., required to perform) the synchronization. The TRP may transmit wide and/or narrow beams in a sync burst. For a wide beam transmitted, a set (e.g., a corresponding set) of narrow beams may be transmitted. The narrow beams may be spatially contained with the wide beam. In the hybrid approach a WTRU may utilize one or more (e.g., two) search stages. For example, in a first stage a WTRU may sequentially receive from one or more of $L_{RX}$ beam directions during a SYNC burst and for one or more TRP wide beams. A SYNC burst time may complete in the first stage. For example, the first stage may take (e.g., require) a SYNC burst time to complete. During a second stage, a WTRU may receive using (e.g., using only) the detected Rx beam from the first stage. The second stage may not be used (e.g., required) for WTRUs that may be in cell center. A WTRU may receive (e.g., receive only) during the time period when the TRP narrow beams corresponding to the detected TRP wide beam are being transmitted. The second stage may use (e.g., require) one or more SYNC burst times to complete. The latency of the hybrid SYNC operation may be less than the latency of the non-hybrid operations. An example where the TRP uses a single wide beam is shown in FIG. 37.

A wireless transmit/receive unit (WTRU) for synchronizing with a beamforming cellular communications network may include a processor that is configured to: receive, at the WTRU, within a beam, a SYNC burst set, that includes a plurality of SYNC bursts, that each comprise multiple symbols, from the beamforming cellular communications network; and determine, from the SYNC burst set, the synchronization parameters for the WTRU to synchronize with the beamforming cellular communications network.

The WTRU processor may be configured to receive the SYNC burst set using one of a multi-beam sync signal oriented by the beamforming cellular communications network, a multi-beam sync schedule oriented by the WTRU, a multi-beam short SYNC signal, and a hybrid SYNC structure oriented based on the beamforming cellular communications network and the WTRU.

The synchronization parameters may include one or more of a SYNC signal type, a beam sweep type, a beam sweep order, an ACK resource configuration, and a beam hopping pattern.

The WTRU processor may be configured to perform a beam sweep for receiving the SYNC burst set. The beam sweep may comprise a partial beam sweep and the WTRU processor may be configured to determine to conduct the partial beam sweep on certain beams sent by the beamforming cellular communications network.

The WTRU processor may be configured to perform a first beam sweep, determine a first beam pairing between the WTRU and the beamforming cellular communications network, and perform a second beam sweep with the first beam pairing.

The WTRU processor may be configured to determine whether a SYNC operation mode is single beam or multi-beam by using one of PSS and SSS timing and/or frequency differences, PSS sequences and cyclic beam shift; and/or beam sequences in beam sweeps.

The SYNC operation mode may include one of a single beam operation mode, a multi-beam operation mode, and a partial multi-beam operation mode.

Synchronizing a WTRU with a beamforming cellular communications network may include: receiving, at the WTRU, within a beam, a SYNC burst set, comprising a plurality of SYNC bursts that each comprise multiple symbols, from the beamforming cellular communications network; and determining, from the SYNC burst set, the synchronization parameters for the WTRU to synchronize with the beamforming cellular communications network.

Synchronizing a WTRU with a beamforming cellular communications network may include receiving a SYNC burst set using one of a multi-beam sync signal oriented by the beamforming cellular communications network, a multi-beam sync schedule oriented by the WTRU, a multi-beam short SYNC signal, and a hybrid SYNC structure oriented based on the beamforming cellular communications network and the WTRU.

Synchronizing a WTRU with a beamforming cellular communications network may include the WTRU performing a beam sweep in order to receive the SYNC burst set. The beam sweep may include a partial beam sweep. The WTRU may determine to conduct the partial beam sweep on certain beams sent by the beamforming cellular communications network.

Synchronizing a WTRU with a beamforming cellular communications network may include performing a first beam sweep, determining a first beam pairing between the WTRU and the beamforming cellular communications network, and performing a second beam sweep with the first beam pairing.

Synchronizing a WTRU with a beamforming cellular communications network may include determining whether a SYNC operation mode is single beam or multi-beam by using one of PSS and SSS timing and/or frequency differences, PSS sequences and cyclic beam shift; and/or beam sequences in beam sweeps.

The WTRU processor may be configured to perform a beam sweep in order to receive the SYNC burst set. The beam sweep may be a full beam sweep or a partial beam sweep. The WTRU processor may be configured to determine to conduct the partial beam sweep on certain beams sent by the beamforming cellular communications network. The SYNC burst set may be sent from the communications network to the WTRU in a full beam sweep.

The SYNC burst set may be received by the WTRU within in a sub frequency band of the beamforming cellular communications network. The SYNC burst set may be received with a sub-carrier spacing comprising a PSS and SSS sequence.

Synchronizing a WTRU with a beamforming cellular communications network may include one or more processors within the network that are configured to determine a SYNC burst set, including multiple symbols, that include synchronization parameters for the WTRU to synchronize with the beamforming cellular communications network; and sending, within a beam, from the beamforming cellular communications network to the WTRU, the SYNC burst set. The one or more network processors may be configured to send a SYNC burst set to the WTRU using one of a multi-beam sync signal oriented by the beamforming cellular communications network, a multi-beam sync schedule oriented by the WTRU, a multi-beam short SYNC signal, and a hybrid SYNC structure oriented based on the beamforming cellular communications network and the WTRU. The parameters may include one or more of a SYNC signal type, a beam sweep type, a beam sweep order, an ACK resource configuration, and a beam hopping pattern.

The network processors may be configured to send the SYNC burst set in a full beam sweep and to determine whether to use a SYNC operation mode comprising one of a single beam or multi-beam by using one of PSS and SSS timing and/or frequency differences, PSS sequences and cyclic beam shift, and beam sequences in beam sweeps and sending the SYNC bursts with the determined SYNC operation mode. The SYNC operation mode may be one of a single beam operation mode, a multi-beam operation mode, and a partial multi-beam operation mode.

The network processors may be configured to send the SYNC burst in a SYNC burst region that is based on one of: multiple beams for sync signal transmissions with beam sweeping by the beamforming cellular communications network; single beam for sync signal with WTRU beam sweeping; and multiplexed sync signals.

The network processors may be configured to send the SYNC burst set within in a sub frequency band of the beamforming cellular communications network.

The network processors may be configured to send the SYNC burst set with a sub-carrier spacing comprising a PSS and SSS sequence.

Although the features and elements of the disclosed subject matter are described in examples with particular elements, features, combinations, procedural steps, etc., each element, feature, procedural step, etc. may be implemented alone or in any combination with one or more elements, features, procedural steps, etc. whether discussed herein or not.

Although examples described herein discuss LTE, LTE-A, New Radio (NR) or 5G protocols, subject matter described herein are not restricted to these protocols and remain applicable to other wireless systems.

Systems, procedures, and instrumentalities have been disclosed for synchronization in beamformed systems such as new Radio (NR). A common SYNC channel may be provided for single and multi-beam systems. A SYNC burst structure may be provided for beam-based systems. Procedures enabling or supporting single and multi-beam deployment may provide, for example, a common SYNC for TDD and FDD, a common SYNC for mixed numerologies, SYNC for larger bandwidth and SYNC transmission and reception for single and multiple TRPs.

The processes and instrumentalities described herein may apply in any combination, may apply to other wireless technologies, and for other services.

A WTRU may refer to an identity of the physical device, or to the user's identity such as subscription related identities, e.g., MSISDN, SIP URI, etc. WTRU may refer to application-based identities, e.g., user names that may be used per application.

As used herein, time slot is synonymous with SS block.

Each of the computing systems described herein may have one or more computer processors having memory that are configured with executable instructions or hardware for accomplishing the functions described herein including determining the parameters described herein and sending and receiving messages between entities (e.g., WTRU and network) to accomplish the described functions. The processes described above may be implemented in a computer program, software, and/or firmware incorporated in a computer-readable medium for execution by a computer and/or processor.

The processes described above may be implemented in a computer program, software, and/or firmware incorporated in a computer-readable medium for execution by a computer and/or processor. Examples of computer-readable media include, but are not limited to, electronic signals (transmitted over wired and/or wireless connections) and/or computer-readable storage media. Examples of computer-readable storage media include, but are not limited to, a read only memory (ROM), a random access memory (RAM), a register, cache memory, semiconductor memory devices, magnetic media such as, but not limited to, internal hard disks and removable disks, magneto-optical media, and/or optical media such as CD-ROM disks, and/or digital versatile disks (DVDs). A processor in association with software may be used to implement a radio frequency transceiver for use in a WTRU, terminal, base station, RNC, and/or any host computer.

**Claims**

1. A wireless transmit/receive unit, WTRU, for synchronizing with a beamforming cellular communications network, the WTRU comprising:

   a processor (118) configured to:

   receive, at the WTRU, within a beam, a SYNC burst set, comprising a plurality of SYNC bursts that each comprise multiple symbols, from the beamforming cellular communications network, wherein the plurality of SYNC bursts alternate in time between being oriented by a transmission and/or reception point, TRP, of the beamforming cellular communications network and being oriented by the WTRU,

   wherein during a SYNC burst oriented by the TRP a first number of beam directions are sequentially transmitted by the TRP and the WTRU is configured to receive using one or more of a second number of beam directions and

   wherein during a SYNC burst oriented by the WTRU one of said first number of beam directions is transmitted by the TRP and the WTRU is configured to sequentially receive using one or more of said second number of beam directions; and

   determine, from the SYNC burst set, the synchronization parameters for the WTRU to synchronize with the beamforming cellular communications network.

2. The WTRU of claim 1, wherein the synchronization parameters comprise one or more of a SYNC signal type, a beam sweep type, a beam sweep order, an ACK resource configuration, and a beam hopping pattern.

3. The WTRU of claim 1, wherein the processor (118) is configured to perform a beam sweep in order to receive the SYNC burst set.

4. The WTRU of claim 3, wherein the beam sweep comprises a partial beam sweep and the processor is configured to determine to conduct the partial beam sweep on certain beams sent by the beamforming cellular communications network.

5. The WTRU of claim 1, wherein the processor (118) is further configured to perform a first beam sweep, determine a first beam pairing between the WTRU and the beamforming cellular communications network, and perform a second beam sweep with the first beam pairing.

6. The WTRU of claim 1, wherein the processor (118) is further configured to determine whether a SYNC operation mode is single beam or multi-beam by using one of PSS and SSS timing and/or frequency differences, PSS sequences and cyclic beam shift; and/or beam sequences in beam sweeps.

7. The WTRU of claim 6, wherein the SYNC operation mode comprises one of single beam operation mode, multi-beam operation mode, and partial multi-beam operation mode.

8. A method for synchronizing a wireless transmit/receive unit, WTRU, with a beamforming cellular communications network, the method comprising:

receiving, at the WTRU, within a beam, a SYNC burst set, comprising a plurality of SYNC bursts that each comprise multiple symbols, from the beamforming cellular communications network, wherein the plurality of SYNC bursts alternate in time between being oriented by a transmission and/or reception point, TRP, of the beamforming cellular communications network and being oriented by the WTRU,

wherein during a SYNC burst oriented by the TRP a first number of beam directions are sequentially transmitted by the TRP and the WTRU receives using one of a second number of beam directions and wherein during a SYNC burst oriented by the WTRU one of said first number of beam directions is transmitted by the TRP and the WTRU sequentially receives using one or more of said second number of beam directions; and
determining, at the WTRU and from the SYNC burst set, the synchronization parameters for the WTRU to synchronize with the beamforming cellular communications network.

9. The method of claim 8, wherein the synchronization parameters comprise one or more of a SYNC signal type, a beam sweep type, a beam sweep order, an ACK resource configuration, and a beam hopping pattern.

10. The method of claim 8, further comprising the WTRU performing a beam sweep in order to receive the SYNC burst set and wherein the beam sweep comprises a partial beam sweep and the WTRU determines to conduct the partial beam sweep on certain beams sent by the beamforming cellular communications network.

11. The method of claim 8, further comprising the WTRU performing a first beam sweep, determining a first beam pairing between the WTRU and the beamforming cellular communications network, and performing a second beam sweep with the first beam pairing.

12. The method of claim 8 further comprising the WTRU determining whether a SYNC operation mode is single beam or multi-beam by using one of PSS and SSS timing and/or frequency differences, PSS sequences and cyclic beam shift; and/or beam sequences in beam sweeps.

13. The method of claim 8, wherein the SYNC operation mode comprises one of single beam operation mode, multi-beam operation mode, and partial multi-beam operation mode.

**Patentansprüche**

1. Drahtlose Sende-/Empfangseinheit, WTRU, zum Synchronisieren mit einem Strahlformungsmobilfunkkommunikationsnetz, die WTRU umfassend:
einen Prozessor (118), der ausgelegt ist zum:

Empfangen, an der WTRU, innerhalb eines Strahls, eines SYNC-Burst-Satzes, umfassend eine Vielzahl von SYNC-Bursts, die jeweils mehrere Symbole umfassen, vom Strahlformungsmobilfunkkommunikationsnetz, wobei die Vielzahl von SYNC-Bursts im Laufe der Zeit zwischen einer Ausrichtung durch einen Übertragungs- und/oder Empfangspunkt, TRP, des Strahlformungsmobilfunkkommunikationsnetzes und einer Ausrichtung durch die WTRU abwechseln,
wobei während eines durch den TRP ausgerichteten SYNC-Bursts eine erste Anzahl von Strahlrichtungen sequentiell durch den TRP übertragen wird und die WTRU zum Empfang unter Verwendung einer oder mehrerer von einer zweiten Anzahl von Strahlrichtungen ausgelegt ist und
wobei während eines durch die WTRU ausgerichteten SYNC-Bursts eine der ersten Anzahl von Strahlrichtungen durch den TRP übertragen wird und die WTRU zu einem sequentiellen Empfang unter Verwendung einer oder mehrerer der zweiten Anzahl von Strahlrichtungen ausgelegt ist; und
Bestimmen, aus dem SYNC-Burst-Satz, der Synchronisierungsparameter für die WTRU zum Synchronisieren mit dem Strahlformungsmobilfunkkommunikationsnetz.

2. WTRU nach Anspruch 1, wobei die Synchronisierungsparameter eines oder mehrere von einem SYNC-Signal-Typ, einem Strahl-Sweep-Typ, einer Strahl-Sweep-Reihenfolge, einer ACK-Ressourcenkonfiguration und einem Strahl-Hopping-Muster umfassen.

3. WTRU nach Anspruch 1, wobei der Prozessor (118) zum Durchführen eines Strahl-Sweeps, um den SYNC-Burst-Satz zu empfangen, ausgelegt ist.

4. WTRU nach Anspruch 3, wobei der Strahl-Sweep einen teilweisen Strahl-Sweep umfasst und der Prozessor zum Bestimmen eines Durchführens des teilweisen Strahl-Sweeps bei bestimmten durch das Strahlformungsmobilfunkkommunikationsnetz gesendeten Strahlen ausgelegt ist.

5. WTRU nach Anspruch 1, wobei der Prozessor (118) ferner zum Durchführen eines ersten Strahl-Sweeps, Bestimmen einer ersten Strahlkopplung zwischen der WTRU und dem Strahlformungsmobilfunkkommunikationsnetz und Durchführen eines zweiten Strahl-Sweeps mit der ersten Strahlkopplung ausgelegt ist.

6. WTRU nach Anspruch 1, wobei der Prozessor (118) ferner zum Bestimmen, ob ein SYNC-Betriebsmodus ein Einzelstrahl oder ein Mehrstrahl ist, durch Verwenden von einem von PSS- und SSS-Timing und/oder Frequenzunterschieden, PSS-Sequenzen und zyklischer Strahlverschiebung und/oder Strahlsequenzen in Strahl-Sweeps ausgelegt ist.

7. WTRU nach Anspruch 6, wobei der SYNC-Betriebsmodus eines von Einzelstrahlbetriebsmodus, Mehrstrahlbetriebsmodus und Betriebsmodus mit teilweisem Mehrstrahl umfasst.

8. Verfahren zum Synchronisieren einer drahtlosen Sende-/Empfangseinheit, WTRU, mit einem Strahlformungsmobilfunkkommunikationsnetz, das Verfahren umfassend:

Empfangen, an der WTRU, innerhalb eines Strahls, eines SYNC-Burst-Satzes, umfassend eine Vielzahl von SYNC-Bursts, die jeweils mehrere Symbole umfassen, vom Strahlformungsmobilfunkkommunikationsnetz, wobei die Vielzahl von SYNC-Bursts im Laufe der Zeit zwischen einer Ausrichtung durch einen Übertragungs- und/oder Empfangspunkt, TRP, des Strahlformungsmobilfunkkommunikationsnetzes und einer Ausrichtung durch die WTRU abwechseln,
wobei während eines durch den TRP ausgerichteten SYNC-Bursts eine erste Anzahl von Strahlrichtungen sequentiell durch den TRP übertragen wird und die WTRU unter Verwendung einer von einer zweiten Anzahl von Strahlrichtungen empfängt und
wobei während eines durch die WTRU ausgerichteten SYNC-Bursts eine der ersten Anzahl von Strahlrichtungen durch den TRP übertragen wird und die WTRU unter Verwendung einer oder mehrerer der zweiten Anzahl von Strahlrichtungen sequentiell empfängt; und
Bestimmen, an der WTRU und aus dem SYNC-Burst-Satz, der Synchronisierungsparameter für die WTRU zum Synchronisieren mit dem Strahlformungsmobilfunkkommunikationsnetz.

9. Verfahren nach Anspruch 8, wobei die Synchronisierungsparameter eines oder mehrere von einem SYNC-Signal-Typ, einem Strahl-Sweep-Typ, einer Strahl-Sweep-Reihenfolge, einer ACK-Ressourcenkonfiguration und einem Strahl-Hopping-Muster umfassen.

10. Verfahren nach Anspruch 8, ferner umfassend ein Durchführen, durch die WTRU, eines Strahl-Sweeps, um den SYNC-Burst-Satz zu empfangen, und wobei der Strahl-Sweep einen teilweisen Strahl-Sweep umfasst und die WTRU ein Durchführen des teilweisen Strahl-Sweeps bei bestimmten durch das Strahlformungsmobilfunkkommunikationsnetz gesendeten Strahlen bestimmt.

11. Verfahren nach Anspruch 8, ferner umfassend ein Durchführen, durch die WTRU, eines ersten Strahl-Sweeps, Bestimmen einer ersten Strahlkopplung zwischen der WTRU und dem Strahlformungsmobilfunkkommunikationsnetz und Durchführen eines zweiten Strahl-Sweeps mit der ersten Strahlkopplung.

12. Verfahren nach Anspruch 8, ferner umfassend das Bestimmen, durch die WTRU, ob ein SYNC-Betriebsmodus ein Einzelstrahl oder ein Mehrstrahl ist, durch Verwenden von einem von PSS- und SSS-Timing und/oder Frequenzunterschieden, PSS-Sequenzen und zyklischer Strahlverschiebung und/oder Strahlsequenzen in Strahl-Sweeps.

**13.** Verfahren nach Anspruch 8, wobei der SYNC-Betriebsmodus eines von Einzelstrahlbetriebsmodus, Mehrstrahlbetriebsmodus und Betriebsmodus mit teilweisem Mehrstrahl umfasst.

**Revendications**

**1.** Unité d'émission/réception sans fil, WTRU, destinée à se synchroniser avec un réseau de communications cellulaires à formation de faisceau, la WTRU comprenant :

un processeur (118) configuré pour :
recevoir, au niveau de la WTRU, à l'intérieur d'un faisceau, un ensemble de salves SYNC, comprenant une pluralité de salves SYNC qui comprennent chacune de multiples symboles, à partir du réseau de communications cellulaires à formation de faisceau, la pluralité de salves SYNC alternant dans le temps entre leur orientation par un point d'émission et/ou de réception, TRP, du réseau de communications cellulaires à formation de faisceau et leur orientation par la WTRU,

dans laquelle, lors d'une salve SYNC orientée par le TRP, un premier nombre de directions de faisceau est transmis séquentiellement par le TRP et la WTRU est configurée pour recevoir dans une ou plusieurs directions d'un second nombre de directions de faisceau et
dans laquelle lors d'une salve SYNC orientée par la WTRU une direction dudit premier nombre de directions de faisceau est transmise par le TRP et la WTRU est configurée pour recevoir séquentiellement dans une ou plusieurs directions dudit second nombre de directions de faisceau ; et

déterminer, à partir de l'ensemble de salves SYNC, les paramètres de synchronisation permettant à la WTRU de se synchroniser avec le réseau de communications cellulaires à formation de faisceau.

**2.** WTRU selon la revendication 1, dans laquelle les paramètres de synchronisation comprennent un ou plusieurs paramètres parmi un type de signal SYNC, un type de balayage de faisceau, un ordre de balayage de faisceau, une configuration de ressource ACK et une configuration de saut de faisceau.

**3.** WTRU selon la revendication 1, dans laquelle le processeur (118) est configuré pour réaliser un balayage de faisceau afin de recevoir l'ensemble de salves SYNC.

**4.** WTRU selon la revendication 3, dans laquelle le balayage de faisceau comprend un balayage de faisceau partiel et le processeur est configuré pour déterminer qu'il convient d'effectuer le balayage de faisceau partiel sur certains faisceaux envoyés par le réseau de communications cellulaires à formation de faisceau.

**5.** WTRU selon la revendication 1, dans laquelle le processeur (118) est configuré en outre pour réaliser un premier balayage de faisceau, déterminer un premier appariement de faisceau entre la WTRU et le réseau de communications cellulaires à formation de faisceaux, et réaliser un second balayage de faisceau avec le premier appariement de faisceau.

**6.** WTRU selon la revendication 1, dans laquelle le processeur (118) est configuré en outre pour déterminer qu'un mode de fonctionnement SYNC est à faisceau unique ou à faisceaux multiples en utilisant des différences de cadencement et/ou de fréquences de PSS ou SSS, des séquences PSS avec décalage cyclique de faisceau ; et/ou des séquences de faisceaux dans des balayages de faisceau.

**7.** WTRU selon la revendication 6, dans laquelle le mode de fonctionnement SYNC comprend un mode de fonctionnement à faisceau unique, un mode de fonctionnement à faisceaux multiples et un mode de fonctionnement à faisceaux multiples partiel.

**8.** Procédé de synchronisation d'une unité d'émission/réception sans fil, WTRU, avec un réseau de communications cellulaires à formation de faisceau, le procédé comprenant :

la réception, au niveau de la WTRU, à l'intérieur d'un faisceau, d'un ensemble de salves SYNC, comprenant une pluralité de salves SYNC qui comprennent chacune plusieurs symboles, à partir du réseau de communications cellulaires à formation de faisceau, la pluralité de salves SYNC alternant dans le temps entre leur orientation par un point d'émission et/ou de réception, TRP, du réseau de communications cellulaires à formation de faisceau et leur orientation par la WTRU,

dans lequel, lors d'une salve SYNC orientée par le TRP, un premier nombre de directions de faisceau est transmis séquentiellement par le TRP et la WTRU reçoit dans une direction d'un second nombre de directions de faisceau et

dans lequel lors d'une salve SYNC orientée par la WTRU une direction dudit premier nombre de directions de faisceau est transmise par le TRP et la WTRU reçoit séquentiellement dans une ou plusieurs directions dudit second nombre de directions de faisceau ; et

la détermination, au niveau de la WTRU et à partir de l'ensemble de salves SYNC, des paramètres de synchronisation permettant à la WTRU de se synchroniser avec le réseau de communications cellulaires à formation de faisceau.

9. Procédé selon la revendication 8, dans lequel les paramètres de synchronisation comprennent un ou plusieurs paramètres parmi un type de signal SYNC, un type de balayage de faisceau, un ordre de balayage de faisceau, une configuration de ressource ACK, et une configuration de saut de faisceau.

10. Procédé selon la revendication 8, comprenant en outre la réalisation par la WTRU d'un balayage de faisceau afin de recevoir l'ensemble de salves SYNC et dans lequel le balayage de faisceau comprend un balayage de faisceau partiel et la WTRU détermine qu'il convient de réaliser le balayage de faisceau partiel sur certains faisceaux envoyés par le réseau de communications cellulaires à formation de faisceau.

11. Procédé selon la revendication 8, comprenant en outre la réalisation par la WTRU d'un premier balayage de faisceau, la détermination d'un premier appariement de faisceau entre la WTRU et le réseau de communications cellulaires à formation de faisceaux, et la réalisation d'un second balayage de faisceau avec le premier appariement de faisceau.

12. Procédé selon la revendication 8 comprenant en outre la détermination par la WTRU qu'un mode de fonctionnement SYNC est à faisceau unique ou à faisceaux multiples en utilisant des différences de cadencement et/ou de fréquences de PSS ou SSS, des séquences PSS avec décalage cyclique de faisceau ; et/ou des séquences de faisceaux dans des balayages de faisceau.

13. Procédé selon la revendication 8, dans lequel le mode de fonctionnement SYNC comprend un mode de fonctionnement à faisceau unique, un mode de fonctionnement à faisceaux multiples et un mode de fonctionnement à faisceaux multiples partiel.

**FIG. 1A**

EP 3 520 240 B1

**FIG. 1B**

**FIG. 1C**

**FIG. 1D**

EP 3 520 240 B1

Multi-beam Regular
SYNC Signal
(gNB-oriented)

| SYNC beam 1 | SYNC beam 2 | | SYNC beam M |
|---|---|---|---|

| UE RX beam |
|---|

**FIG. 2**

Multi-beam Regular
SYNC Signal
(UE-oriented)

| SYNC beam |
|---|

| UE RX beam 1 | UE RX beam 2 | | UE RX beam N |
|---|---|---|---|

**FIG. 3**

Multi-beam Short
SYNC Signal

| SYNC beam i |
|---|

| UE RX beam 1 | UE RX beam 2 | UE RX beam 3 |
|---|---|---|

**FIG. 4**

TRP-
oriented
SYNC Burst

UE-oriented
SYNC Burst

TRP-
oriented
SYNC Burst

UE-oriented
SYNC Burst

TRP-
oriented
SYNC Burst

UE-oriented
SYNC Burst

# FIG. 5A

Multi-beam Full
SYNC Signal

Multi-beam Partial
SYNC Type 1

Multi-beam Partial
SYNC Type 2

Single beam SYNC

# FIG. 5B

**FIG. 6**

Basic SYNC Signal Generation

↓

Sequence property adjustment

↓

Select a sequence or sequence combination that is a function of beam deployment

↓

Transmit SYNC signal using the selected sequence or sequence combination

↓

**FIG. 7**

Detect SYNC Signal

↓

Check Sequence Property

↓

Determine a sequence or sequence combination that is a function of beam deployment

↓

Determine the beam deployment

↓

**FIG. 9**

FIG. 8

One or more Sync types are used (based on PSS/SSS time/frequency offset, sequence, or combination of those)

↓

A UE detects Sync type during initial access procedure

↓

The UE determines Sync type

Type-1 Sync                    Type-2 Sync

Single beam operation mode                    Multi-beam operation mode

↓                                              ↓

Subsequent initial access procedure based on single beam                    Subsequent initial access procedure based on multi-beam

# FIG. 10

SYNC signal
symbol
1 to M

SYNC signal
symbol
1 to M

| 1 | 2 | .. | .. | M |

| 1 | 2 | .. | .. | M |

● ● ●

● ● ●

SYNC signal
burst 1

SYNC signal
burst N

SYNC signal burst set
(containing N SYNC signal bursts)

# FIG. 11

Frequency

## Single beam mode
## (within a SYNC signal burst)

SYNC signal
symbol 1

· · ·

SYNC signal
symbol M

time

Frequency

## Multi-beam mode
## (within a SYNC signal burst)

SYNC signal
symbol 1

· · ·

SYNC signal
symbol M

time

# FIG. 12

SYNC signal
symbol
1 to M

SYNC signal
symbol
1 to M

| 1 | 2 | .. | .. | M |

• • •

| 1 | 2 | .. | .. | M |

• • •

SYNC signal
burst 1

SYNC signal
burst N

SYNC signal burst set
(containing N SYNC signal bursts)

Frequency

Multi-beam mode
(within a SYNC signal burst)

• • •

SYNC signal
symbol 1

SYNC signal
symbol M

time

# FIG. 13

SYNC signal
symbol
1 to M

SYNC signal
symbol
1 to M

| 1 | 2 | .. | .. | M |
|---|---|---|---|---|

• • •

| 1 | 2 | .. | .. | M |
|---|---|---|---|---|

• • •

SYNC signal
burst 1

SYNC signal
burst N

SYNC signal burst set
(containing N SYNC signal bursts)

Frequency

Multi-beam mode
(within a SYNC signal burst)

• • •

SYNC signal
symbol 1

SYNC signal
symbol M

time

# FIG. 14

**FIG. 15**

SYNC signal
symbol
1 to M

SYNC signal
symbol
1 to M

| 1 | 2 | .. | .. | M |
|---|---|----|----|---|

| 1 | 2 | .. | .. | M |
|---|---|----|----|---|

• • •

• • •

SYNC signal
burst 1

SYNC signal
burst N

SYNC signal burst set
(containing N SYNC signal bursts)

Frequency

Multi-beam mode
(within a SYNC signal burst)

• • •

SYNC signal
symbol 1

SYNC signal
symbol M

time

# FIG. 16

43

Frequency

FDD single beam structure

FDD multi-beam gNB-oriented
partial structure

Frequency

time

time

FDD multi-beam UE-oriented
partial structure

Frequency

FDD multi-beam full structure

Frequency

time

time

## FIG. 17A

Frequency

TDD single beam structure

| S S S | P S S | | S S S | P S S |

time

TDD multi-beam gNB-oriented partial structure

Frequency

| S S S | P S S | | S S S | P S S |

time

TDD multi-beam UE-oriented partial structure

Frequency

| S S S | P S S | | S S S | P S S |

time

TDD multi-beam full structure

Frequency

| S S S | P S S | | S S S | P S S |

time

# FIG. 17B

FIG. 18

**FIG. 22**

Minimum transmission bandwidth > 1.08 MHz

R B 1 ...... R B 6 ......

62 sub-carriers

TTI index

| 0 | 1 | 2 | 3 | 4 | 5 | 6 | 7 | 8 | 9 |
|---|---|---|---|---|---|---|---|---|---|
| D | S | U | F | F | D | S/D | F | F | F |

**FIG. 19**

**FIG. 21**

Minimum transmission bandwidth = 1.08 MHz

RB1 RB6

62 sub-carriers

**FIG. 20**

**FIG. 23**

**FIG. 24**

Minimum transmission bandwidth > 1.08 MHz

$(N_{ZC}-1)$ >62 sub-carriers

**FIG. 25A**

62 sub-carriers

X separation RBs

62 sub-carriers

X separation RBs

62 sub-carriers

RB1
RB6

RB1
RB6

RB1
RB6

Minimum transmission bandwidth > 1.08 MHz

FIG. 25B

62 sub-carriers

X sub-carriers

62 sub-carriers

X sub-carriers

62 sub-carriers

Minimum transmission bandwidth > 1.08 MHz

# FIG. 25C

FIG. 25D

EP 3 520 240 B1

| CP | $SSS_1$ | CP | $PSS_1$ |
|----|---------|----|---------|

| CP | $SSS_2$ | CP | $PSS_2$ |
|----|---------|----|---------|

**FIG. 26**

**FIG. 27**

TRP 1

TRP 2

**FIG. 28**

TRP1

TRP2

**FIG. 29**

FIG. 30

TRP 1

| SYNC beam 1 | SYNC beam 2 | | SYNC beam M | SYNC beam 1 | SYNC beam 2 | | SYNC beam M |

TRP 2

| SYNC beam 2 | SYNC beam 3 | | SYNC beam M | SYNC beam 1 | SYNC beam 2 | | SYNC beam M |

**FIG. 31**

EP 3 520 240 B1

TRP 1

| SYNC beam 1 | SYNC beam 2 | | SYNC beam M |

TRP 2

| SYNC beam 2 | SYNC beam 1 | | SYNC beam M |

**FIG. 32**

FIG. 33

FIG. 34

**FIG. 35**

**FIG. 36**

## Hybrid TRP/UE Oriented

Tx Beam Wide

Base Station | Wide | 1 | 2 | . . . | $L_{tx}$ |

Wide | 1 | 2 | . . . | $L_{tx}$ |

UE | 1 | 2 | . . . | $L_{rx}$ |

maxBeam

Rx Beam 1        Rx Beam N

Rx Beam max

# FIG. 37

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Initial performance evaluation of different beamforming options for NR synchronization signals. **INTEL CORPORATION.** 3GPP DRAFT; R1-167707, 3RD GENERATION PARTNERSHIP PROJECT (3GPP). MOBILE COMPETENCE CENTRE

- Discussion on initial access and mobility for NR. **NTT DOCOMO et al.** 3GPP DRAFT; R1-167912_DISCUSSION ON INITIAL ACCESS AND MOBILITY FOR NR, 3RD GENERATION PARTNERSHIP PROJECT (3GPP). MOBILE COMPETENCE CENTRE, 22 August 2016